# EUROPEAN PATENT APPLICATION

(11) **EP 4 663 644 A1**
(43) Date of publication of application: **17.12.2025**
(21) Application number: 24756815.7
(22) Date of filing: 09.02.2024
(51) Int. Cl.: C07F 7/18, C09K 3/18, G02B 1/14

(54) **SILANE COMPOUND**

(30) Priority: 15.02.2023 JP 2023021525
(71) Applicant: Daikin Industries, Ltd., Osaka-shi, Osaka 530-0001 (JP)
(72) Inventor: TAKANO, Shinya, Osaka-Shi, Osaka 530-0001 (JP); HANDA, Shinya, Osaka-Shi, Osaka 530-0001 (JP); MATSUI, Motoshi, Osaka-Shi, Osaka 530-0001 (JP); KUBOTA, Hiroki, Osaka-Shi, Osaka 530-0001 (JP); KATSUMA, Nozomi, Osaka-Shi, Osaka 530-0001 (JP); HARA, Manami, Osaka-Shi, Osaka 530-0001 (JP); NOMURA, Takashi, Osaka-Shi, Osaka 530-0001 (JP)
(74) Representative: Hoffmann Eitle
(86) International application number: PCT/JP2024/004564
(87) International publication number: WO 2024/171970

(57) **Abstract**

The present invention provides a compound of the following formula (1) wherein R¹ is a monovalent group containing one or more Si atoms to which neither a hydroxyl group nor a hydrolyzable group is directly bonded, X¹ is a divalent organic group containing an amide bond, R¹¹ is each independently a hydroxyl group or a hydrolyzable group, R¹² is each independently a hydrogen atom or a monovalent organic group, and n1 is an integer of 1 to 3.

R¹ - X¹ - SiR¹¹ₙ₁R¹²₃₋ₙ₁ (¹)

## Description

### Technical Field

The present disclosure relates to a silane compound.

### Background Art

Certain types of silane compounds are known to be capable of providing excellent water- and oil-repellency, when used in surface treatment of a substrate (Patent Literature 1).

### Citation List

### Patent Literature

Patent Literature 1: JP 2019-44179 A

### Summary of Invention

### Technical Problem

An object of the present disclosure is to provide a compound capable of forming a surface-treating layer having excellent abrasion durability and alkali resistance.

### Solution to Problem

The present disclosure includes the following embodiments.
[1] A compound of the following formula (1):

   R¹-X¹-SiR¹¹ₙ₁R¹²₃₋ₙ₁ (1)

   wherein
   R¹ is a monovalent group containing one or more Si atoms to which neither a hydroxyl group nor a hydrolyzable group is directly bonded,
   X¹ is a divalent organic group containing an amide bond,
   R¹¹ is each independently a hydroxyl group or a hydrolyzable group,
   R¹² is each independently a hydrogen atom or a monovalent organic group, and
   n1 is an integer of 1 to 3.
[2] The compound according to [1], wherein
   R¹ is R³-(SiR⁴₂O)ₙ-SiR⁴₂-,
   R³ is a C₁₋₁₂ alkyl group, a phenyl group, or a group A,
   the group A is a group of the following formula:

      R⁵¹ₙₐR⁵²₃₋ₙₐSi-(O)_{z}- (A)

      wherein
   R⁵¹ is each independently a group of R⁵³-(SiR⁵³₂-R⁶¹)ₘₐ-,
      R⁶¹ is each independently a single bond, an oxygen atom, or a C₁₋₆ alkylene group,
      R⁵³ is each independently a hydrocarbon group or R^{51'},
         R^{51'} has the same meaning as R⁵¹,
      ma is each independently an integer of 1 to 5,
   provided that the number of R^{51'} in R⁵¹ is 20 or less,
   R⁵² is each independently a hydrocarbon group,
   na is an integer of 1 to 3, and
   z is 0 or 1,
   R⁴ is each independently a C₁₋₁₂ alkyl group, a phenyl group, or R³-(SiR^{4'}₂O)ₙ-,
   R^{4'} is each independently a C₁₋₁₂ alkyl group or a phenyl group, and
   n is 1 to 1500.
[3] The compound according to [2], wherein R³ is a C₁₋₄ alkyl group.
[4] The compound according to [2], wherein R³ is a methyl group.
[5] The compound according to [2] or [3], wherein R⁴ is a methyl group.
[6] The compound according to any one of [1] to [5], wherein X¹ is a group of the following formula:

   -R¹⁴-CONR¹³-R¹⁵-

   wherein
   R¹³ is a hydrogen atom, a C₁₋₆ alkyl group, or a phenyl group,
   R¹⁴ is -(R⁵¹)ₚ₅-(X⁵¹)_{q5}-,
   R⁵¹ is a single bond, -(CH₂)ₚ-, or an o-, m-, or p-phenylene group,
   p5 is an integer of 0 to 30,
   X⁵¹ is -(X⁵²)₁₅-,
   X⁵² is each independently a group selected from the group consisting of -O-, -S-, an o-, m- or p-phenylene group, -CO-, -C(O)O-, -CONR⁵⁴-, -O-CONR⁵⁴-, -NR⁵⁴-, and - (CH₂)ₙ₅-,
   R⁵⁴ is each independently a hydrogen atom or a monovalent organic group,
   n5 is each independently an integer of 1 to 20,
   15 is an integer of 1 to 10,
   p5 is 0 or 1,
   q5 is 0 or 1,
   R¹⁵ is a single bond, -(CH₂)_{q}-, or an o-, m-, or p-phenylene group, and
   q is an integer of 1 to 10.
[7] The compound according to any one of [1] to [6], wherein
   R¹ is a group of the following formula :

      R³-(SiR⁴₂O)ₙ-SiR⁴₂-

      wherein
   R³ is a C₁₋₄ alkyl group,
   R⁴ is a methyl group, and
   n is 1 to 80,
   X¹ is a group of the following formula:

      -(CH₂)ₚ-CONR¹³-(CH₂)_{q}-

      -(CH₂)ₚ₁-O-(CH₂)ₚ₂-CONR¹³-(CH₂)_{q}-

      wherein
   R¹³ is a hydrogen atom,
   p is an integer of 1 to 30,
   p1 is an integer of 1 to 10,
   p2 is an integer of 1 to 10, and
   q is an integer of 1 to 10,
   R¹¹ is OCH₃, and
   nl is 3.
[8] The compound according to [7], wherein n is an integer of 1 to 30.
[9] The compound according to [7], wherein n is an integer of 20 to 80.
[10] The compound according to any one of [1] to [9], wherein R¹ is R³-(SiR⁴₂O)ₙ-SiR⁴₂-,
   R³ is a C₁₋₄ alkyl group or a group A,
   the group A is [(CH₃)₃SiO]₂CH₃Si(CH₃)₂O- or [(CH₃)₃SiO]₃Si(CH₃)₂O-,
   R⁴ is a methyl group,
   n is 1 to 100,
   X¹ is -(CH₂)ₚ-CONH-(CH₂)_{q}-,
   p is an integer of 3 to 30, and
   q is an integer of 2 to 3.
[11] The compound according to any one of [1] to [10], which is selected from the following compounds:

   CH₃Si(CH₃)₂O(Si(CH₃)₂O)ₙSi(CH₃)₂(CH₂)₁₀CONHCH₂CH₂CH₂Si(OCH₃)₃,

   CH₃(CH₂)₃(Si(CH₃)₂O)ₙSi(CH₃)₂(CH₂)₃OCH₂CONHCH₂CH₂CH₂Si(OCH₃)₃,

   CH₃CH₂CH₂CH₂Si(CH₃)₂O(Si(CH₃)₂O)ₙSi(CH₃)₂CH₂CH₂CH₂OCH₂CONHCH₂CH₂CH ₂Si(OCH₃)₃,

   [(CH₃)₃SiO]₂CH₃SiO(Si(CH₃)₂O)ₙSi(CH₃)₂CH₂CH₂CH₂CH₂CH₂CH₂CH₂CH₂CH₂CH₂C H₂CH₂CH₂CH₂CH₂CH₂CH₂CH₂CH₂CH₂CH₂CH₂CONHCH₂CH₂CH₂Si(OCH₃)₃,

   [(CH₃)₃SiO]₃SiO(Si(CH₃)₂O)ₙSi(CH₃)₂CH₂CH₂CH₂CH₂CH₂CH₂CH₂CH₂CH₂CH₂CH₂C H₂CH₂CH₂CH₂CH₂CH₂CH₂CH₂CH₂CH₂CH₂CONHCH₂CH₂CH₂Si(OCH₃)₃,

   wherein n is an integer of 2 to 80.
[12] The compound according to any one of [1] to [11], which is selected from the following compounds:

   CH₃Si(CH₃)₂O(Si(CH₃)₂O)ₙSi(CH₃)₂(CH₂)₁₀CONHCH₂CH₂CH₂Si(OCH₃)₃,

   wherein n is an integer of 10 to 30,

   CH₃(CH₂)₃(Si(CH₃)₂O)ₙSi(CH₃)₂(CH₂)₃OCH₂CONHCH₂CH₂CH₂Si(OCH₃)₃,

   wherein n is an integer of 10 to 30,

   CH₃CH₂CH₂CH₂Si(CH₃)₂O(Si(CH₃)₂O)ₙSi(CH₃)₂CH₂CH₂CH₂OCH₂CONHCH₂CH₂CH ₂Si(OCH₃)₃,

   wherein n is an integer of 40 to 70,

   [(CH₃)₃SiO]₂CH₃SiO(Si(CH₃)₂O)ₙSi(CH₃)₂CH₂CH₂CH₂CH₂CH₂CH₂CH₂CH₂CH₂CH₂C H₂CH₂CH₂CH₂CH₂CH₂CH₂CH₂CH₂CH₂CH₂CH₂CONHCH₂CH₂CH₂Si(OCH₃)₃,

   wherein n is an integer of 5 to 20,

   [(CH₃)₃SiO]₃SiO(Si(CH₃)₂O)ₙSi(CH₃)₂CH₂CH₂CH₂CH₂CH₂CH₂CH₂CH₂CH₂CH₂CH₂C H₂CH₂CH₂CH₂CH₂CH₂CH₂CH₂CH₂CH₂CH₂CONHCH₂CH₂CH₂Si(OCH₃)₃,

   wherein n is an integer of 5 to 20.
[13] A compound of the following formula (2):

   R³-(SiR⁴₂O)ₙ-SiR⁴₂-(CH₂)ₚ-CONR¹³-(CH₂)_{q'}-CH=CH₂ (2)

   wherein
   R³ is a C₁₋₁₂ alkyl group, a phenyl group, or a group A,
   the group A is a group of the following formula:

      R⁵¹ₙₐR⁵²₃₋ₙₐSi-(O)_{z}- (A)

      wherein
   R⁵¹ is each independently a group of -(R⁵⁴-SiR⁵³₂)ₘₐ-R⁵³,
      R⁵⁴ is each independently an oxygen atom or a C₁₋₆ alkylene group,
      R⁵³ is each independently a hydrocarbon group or R^{1'},
         R^{51'} has the same meaning as R⁵¹,
      ma is each independently an integer of 1 to 5,
   provided that the number of R^{51'} in R⁵¹ is 20 or less,
   R⁵² is each independently or a hydrocarbon group,
   na is 1 to 3, and
   z is 0 or 1,
   R⁴ is each independently a C₁₋₁₂ alkyl group, a phenyl group, or R³-(SiR^{4'}₂O)ₙ-,
   R^{4'} is each independently a C₁₋₁₂ alkyl group, or a phenyl group,
   n is 1 to 1,500,
   R¹³ is a hydrogen atom, a C₁₋₆ alkyl group, or a phenyl group,
   p is an integer of 0 to 30, and
   q' is an integer of 1 to 8.
[14] A composition comprising the compound according to any one of [1] to [12] and a compound of formula (3):

   R²¹-R²²-CONR²⁴-R²³-SiR¹¹ₙ₁R¹²₃₋ₙ₁ (3)

   wherein
   R²¹ is CH₃CH₂CH₂-, CH₃CH=CH-, or R¹²₃₋ₙ₁R¹¹ₙ₁Si-,
   R²² is a C₀₋₃₀ alkylene group,
   R²³ is a C₁₋₁₀ alkylene group,
   R²⁴ is a hydrogen atom, a C₁₋₆ alkyl group, or a phenyl group,
   R¹¹ is each independently a hydroxyl group or a hydrolyzable group,
   R¹² is each independently a hydrogen atom or a monovalent organic group, and
   n1 is an integer of 1 to 3.
[15] The composition according to [14], comprising the compound of the formula (3) in an amount of 0.1% by mass to 30% by mass based on a total amount of the compound of the formula (1) and the compound of the formula (3).
[16] The composition according to [14] or [15], which is a surface-treating agent.
[17] A surface-treating agent comprising the compound according to any one of [1] to [12].
[18] The surface-treating agent according to [16] or [17], further comprising a condensate of the compound according to any one of [1] to [12].
[19] The surface-treating agent according to any one of [16] to [18], further comprising a solvent selected from compounds of R⁸¹OR⁸², R⁸³ₙ₈C₆H₆₋ₙ₈, R⁸⁴R⁸⁵R⁸⁶Si-(O-SiR⁸⁷R⁸⁸)ₘ₈-R⁸⁹, and (OSiR⁸⁷R⁸⁸)ₘ₉
   wherein
   R⁸¹ to R⁸⁹ are each independently a monovalent organic group having 1 to 10 carbon atoms,
   m8 is an integer of 1 to 6,
   m9 is an integer of 4 to 8, and
   n8 is an integer of 0 to 6.
[20] The surface-treating agent according to [19], wherein the solvent is R⁸⁴R⁸⁵R⁸⁶Si-(O-SiR⁸⁷R⁸⁸)ₘ₈-R⁸⁹.
[21] The surface-treating agent according to [19], wherein the solvent is hexamethyldisiloxane, hexaethyldisiloxane, octamethyltrisiloxane, octamethylcyclotetrasiloxane, or decamethylcyclopentasiloxane.
[22] The surface-treating agent according to any one of [16] to [21], which is for vacuum deposition.
[23] The surface-treating agent according to any one of [16] to [22], which is for wet coating.
[24] A pellet comprising the surface-treating agent according to any one of [16] to [23].
[25] An article comprising a substrate and a layer on the substrate, wherein the layer is formed from the compound according to any one of [1] to [12].
[26] The article according to [25], comprising, between the substrate and the aforementioned layer, a silicon oxide-containing intermediate layer.
[27] The article according to [26], wherein the intermediate layer comprises an alkali metal atom.
[28] The article according to [27], wherein the alkali metal atom is at least partially a sodium atom.
[29] The article according to any one of [25] to [28], which is an optical member.
[30] The article according to any one of [25] to [28], which is a display.

### Advantageous Effect of Invention

According to the present disclosure, a compound capable of forming a surface-treating layer having excellent abrasion durability and alkali durability, can be provided.

### Description of Embodiments

The term "monovalent organic group" as used herein refers to a carbon-containing monovalent group. The monovalent organic group is not limited, and may be a hydrocarbon group or a derivative thereof. The derivative of a hydrocarbon group refers to a group that has one or more of N, O, S, Si, amide, sulfonyl, siloxane, carbonyl, carbonyloxy, and the like at the terminal or in the molecular chain of the hydrocarbon group. The term simply referred to as an "organic group" means a monovalent organic group. The term "divalent organic group" refers to a carbon-containing divalent group. The divalent organic group may be, for example, a divalent group obtained by further removing one hydrogen atom from an organic group. Similarly, an organic group having a valence of 3 or more refers to a group obtained by removing a predetermined number of hydrogen atoms from an organic group.

The "hydrocarbon group" as used herein refers to a group containing carbon and hydrogen and a group in which a hydrogen atom is removed from the hydrocarbon. Examples of the hydrocarbon group include, but are not limited to, C₁₋₂₀ hydrocarbon groups, such as an aliphatic hydrocarbon group and an aromatic hydrocarbon group. For example, the "aliphatic hydrocarbon group" may be either linear, branched, or cyclic, and may be either saturated or unsaturated. The hydrocarbon group may contain one or more ring structures. The hydrocarbon group may be substituted with one or more substituents.

Examples of the substituent of the "hydrocarbon group" as used herein include, but are not limited to, a halogen atom; and one or more groups selected from a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5- to 10-membered heterocyclyl group, a 5- to 10-membered unsaturated heterocyclyl group, a C₆₋₁₀ aryl group, and a 5- to 10-membered heteroaryl group each optionally substituted with one or more halogen atoms.

The "hydrolyzable group" as used herein refers to a group that can undergo a hydrolysis reaction, i.e., refers to a group that can be removed from the main backbone of the compound by a hydrolysis reaction. Examples of the hydrolyzable group include -OR^{h}, -OCOR^{h}, -O-N=CR^{h}₂, -NR^{h}₂, -NHR^{h}, -NCO, and a halogen (in these formulae, R^{h} represents a substituted or unsubstituted alkyl group having 1 to 4 carbon atoms), and - OR^{h} (i.e., an alkoxy group) is preferable. Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable.

The silane compound of the present disclosure is a compound of the following formula (1):

R¹-X¹-SiR¹¹ₙ₁R¹²₃₋ₙ₁ (1)

wherein
R¹ is a monovalent group containing one or more Si atoms to which neither a hydroxyl group nor a hydrolyzable group is directly bonded,
X¹ is a divalent organic group containing an amide bond,
R¹¹ is each independently a hydroxyl group or a hydrolyzable group,
R¹² is each independently a hydrogen atom or a monovalent organic group, and
n1 is an integer of 1 to 3.

R¹ is a monovalent group containing one or more Si atoms to which neither a hydroxyl group nor a hydrolyzable group is directly bonded.

The monovalent group containing one or more Si atoms to which neither a hydroxyl group nor a hydrolyzable group is directly bonded may contain a Si atom to which a hydroxyl group or a hydrolyzable group is directly bonded.

In one embodiment, the monovalent group containing one or more Si atoms to which neither a hydroxyl group nor a hydrolyzable group is bonded does not contain a Si atom to which a hydroxyl group or a hydrolyzable group is directly bonded.

In another embodiment, the monovalent group containing one or more Si atoms to which neither a hydroxyl group nor a hydrolyzable group is bonded contains one or more Si atoms to which a hydroxyl group or a hydrolyzable group is directly bonded.

In one embodiment, R¹ is a group of the following formula:

R³-(SiR⁴₂O)ₙ-SiR⁴₂-

wherein
R³ is a C₁₋₁₂ alkyl group, a phenyl group, or a group A:

   R⁵¹ₙₐR⁵² ₃₋ₙₐSi-(O)_{z}- (A)
wherein
R⁵¹ is each independently a group of -(R⁵⁴-SiR⁵³2)ₘₐ-R⁵³,
   R⁵⁴ is each independently an oxygen atom or a C₁₋₆ alkylene group,
   R⁵³ is each independently a hydrocarbon group or R^{51'},
      R^{51'} has the same meaning as R⁵¹,
   ma is each independently an integer of 1 to 5,
provided that the number of R^{51'} in R⁵¹ is 20 or less,
R⁵² is each independently or a hydrocarbon group,
na is 1 to 3, and
z is 0 or 1,
R⁴ is each independently a C₁₋₁₂ alkyl group, a phenyl group, or R³-(SiR⁴'₂O)ₙ-,
R^{4'} is each independently a C₁₋₁₂ alkyl group, or a phenyl group, and
n is 1 to 1,500.

R³ is a C₁₋₁₂ alkyl group, a phenyl group, or a group A.

In one embodiment, R³ is a C₁₋₁₂ alkyl group. In another embodiment, R³ is a phenyl group. In another embodiment, R³ is a group A.

For example, the C₁₋₁₂ alkyl group in R³ may be linear or may be branched. In one embodiment, the C₁₋₁₂ alkyl group is linear. In another embodiment, the C₁₋₁₂ alkyl group is branched. The aforementioned C₁₋₁₂ alkyl group is preferably a C₁₋₆ alkyl group, more preferably a C₁₋₄ alkyl group, even more preferably a methyl group or an ethyl group, and particularly preferably a methyl group.

The group A is a group of the following formula:

R⁵¹ₙₐR⁵²₃₋ₙₐSi-(O)_{z}- (A)

wherein
R⁵¹ is each independently a group of R⁵³-(SiR⁵³₂-R⁶¹)ₘₐ-;
   R⁶¹ is each independently a single bond, an oxygen atom, or a C₁₋₆ alkylene group;
   R⁵³ is each independently a hydrocarbon group or R^{51'},
      R^{51'} has the same meaning as R⁵¹,
   ma is each independently an integer of 1 to 5,
provided that the number of R^{51'} in R⁵¹ is 20 or less,
R⁵² is each independently a hydrocarbon group,
na is an integer of 1 to 3, and
z is 0 or 1.

R⁵¹ is each independently a group of R⁵³-(SiR⁵³₂-R⁶¹)ₘₐ-.

R⁶¹ is each independently a single bond, an oxygen atom, or a C₁₋₆ alkylene group.

For example, the C₁₋₆ alkylene group in R⁶¹ may be linear or may be branched. The C₁₋₆ alkylene group is preferably a C₁₋₄ alkylene group and more preferably a C₂₋₄ alkylene group.

In one embodiment, R⁶¹ is an oxygen atom or a C₁₋₆ alkylene group.

In one embodiment, R⁶¹ is an oxygen atom.

In one embodiment, R⁶¹ is partially an oxygen atom and another R⁶¹ is a C₁₋₆ alkylene group.

R⁵³ is each independently a hydrocarbon group or R^{51'}

The hydrocarbon group in R⁵³ may preferably be an alkyl group or an aryl group.

For example, the alkyl group may be linear or may be branched. The alkyl group is preferably an alkyl group having 1 to 6 carbon atoms, and more preferably an alkyl group having 1 to 4 carbon atoms. The alkyl group is particularly preferably a methyl group, an ethyl group, a n-propyl group, an iso-propyl group, or a tert-butyl group.

For example, the aryl group may be monocyclic or polycyclic. The aryl group is preferably an aryl group having 6 to 20 carbon atoms, and more preferably an aryl group having 6 to 10 carbon atoms. The aryl group is particularly preferably a phenyl group.

R⁵³ is preferably an alkyl group, and more preferably an alkyl group having 1 to 4 carbon atoms.

R^{51'} has the same meaning as R⁵¹. That is, R^{51'} is -R⁵³-(SiR⁵³₂O)ₘₐ-. It is to be noted that the number of R^{51'} in R⁵¹ is 20 or less, preferably 10 or less, more preferably 6 or less, and even more preferably 3 or less.

In one embodiment, R⁵³ is each independently a hydrocarbon group or R^{51'}.

In a preferable embodiment, R⁵³ is each independently a hydrocarbon group.

In one embodiment, R⁵³ is R^{53'}-(SiR^{53'}₂-R^{61'})_{ma'}-
wherein
R^{53'} is each independently a hydrocarbon group or R⁵³-(SiR⁵³₂-R⁶¹)ₘₐ-,
at least one R^{53'} is R⁵³-(SiR⁵³₂-R⁶¹)ₘₐ-,
   or R⁵³ is each independently a hydrocarbon group,
   R⁶¹ is each independently a single bond, an oxygen atom, or a C₁₋₆ alkylene group;
   ma is each independently an integer of 1 to 5,
R^{61'} is each independently an oxygen atom or a C₁₋₆ alkylene group, and
ma' is each independently an integer of 1 to 5.

In another embodiment, in an embodiment, R⁵³ is R^{53'}-(SiR^{53'}₂-R^{61'})_{ma'}- wherein
R^{53'} is each independently a hydrocarbon group or R^{53"}-(SiR^{53"}₂-R^{61"})_{ma"}-,
at least one R^{53'} is W^{53"}-(SiR^{53"}₂-R^{61"})_{ma"}-,
   R^{53"} is each independently a hydrocarbon group or R⁵³-(SiR⁵³₂-R⁶¹)ₘₐ-,
   at least one R^{53"} is R⁵³-(SiR⁵²₂-R⁶¹)ₘₐ-,
      or R⁵³ is each independently a hydrocarbon group,
      R⁶¹ is each independently an oxygen atom or a C₁₋₆ alkylene group,
      ma is each independently an integer of 1 to 5,
   R^{61"} is each independently an oxygen atom or a C₁₋₆ alkylene group,
   ma" is each independently an integer of 1 to 5,
R^{61'} is each independently an oxygen atom or a C₁₋₆ alkylene group, and
ma' is each independently an integer of 1 to 5].

ma is each independently an integer of 1 to 5, and preferably 1 or 2.

R⁵² is each independently a hydrocarbon group.

The hydrocarbon group in R⁵² may preferably be an alkyl group or an aryl group.

The alkyl group may be linear or may be branched. The alkyl group is preferably an alkyl group having 1 to 6 carbon atoms, and more preferably an alkyl group having 1 to 4 carbon atoms. The alkyl group is particularly preferably a methyl group, an ethyl group, a n-propyl group, an iso-propyl group, or a tert-butyl group.

For example, the aryl group may be monocyclic or polycyclic. The aryl group is preferably an aryl group having 6 to 20 carbon atoms, and more preferably an aryl group having 6 to 10 carbon atoms. The aryl group is particularly preferably a phenyl group.

R⁵² is preferably an alkyl group, and more preferably an alkyl group having 1 to 4 carbon atoms.

na is an integer of 1 to 3. In one embodiment, na is 2. In another embodiment, na is 3. Note that na, when R^{51'} is present, is independently selected for (R⁶¹-SiR⁵³₂)ₘₐ.

z is 0 or 1. In one embodiment, z is 0. In another embodiment, z is 1.

In a preferable embodiment, in the group A,
R⁵¹ is each independently a group of R⁵³-(SiR⁵³₂-R⁶¹)ₘₐ-,
   R⁶¹ is each independently a single bond, an oxygen atom, or a C₁₋₆ alkylene group, preferably an oxygen atom or a C₁₋₆ alkylene group,
   R⁵³ is each independently a hydrocarbon group and preferably an alkyl group having 1 to 4 carbon atoms,
   ma is 1 or 2,
R⁵² is each independently a hydrocarbon group and preferably an alkyl group having 1 to 4 carbon atoms, and
na is 1 or 2.

Examples of the group A include, but are not limited to, the following groups.

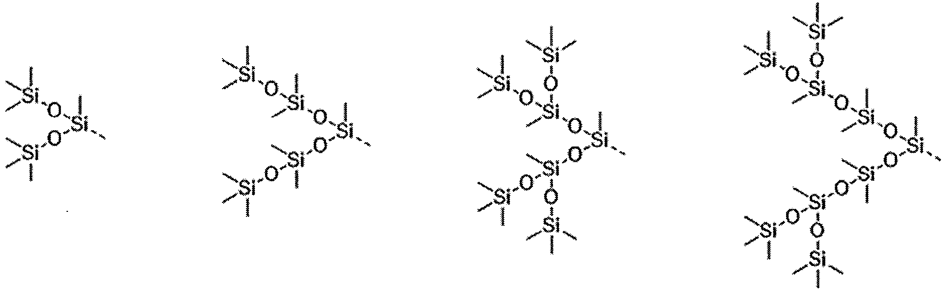

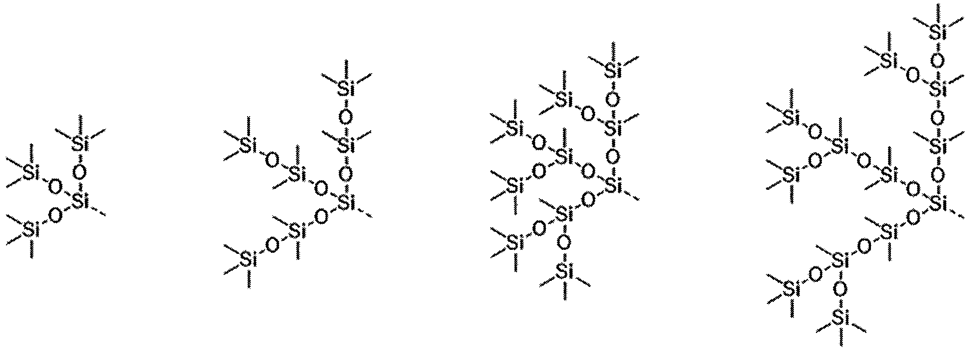

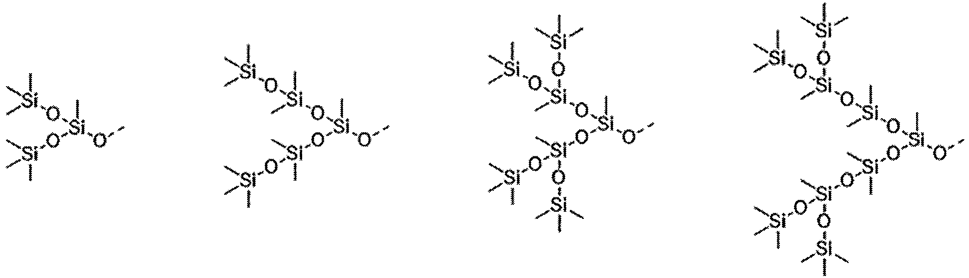

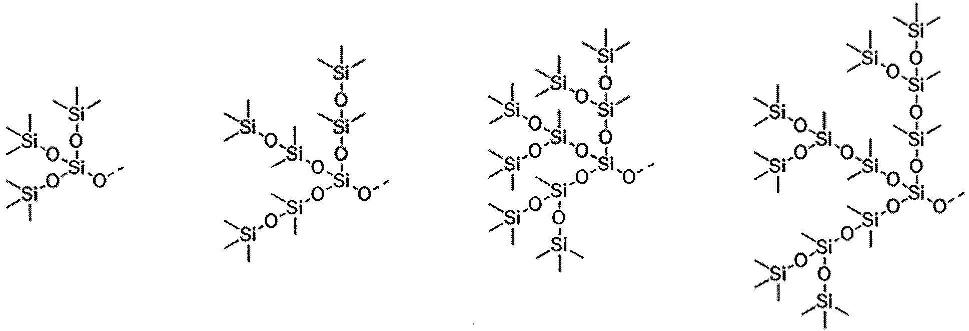

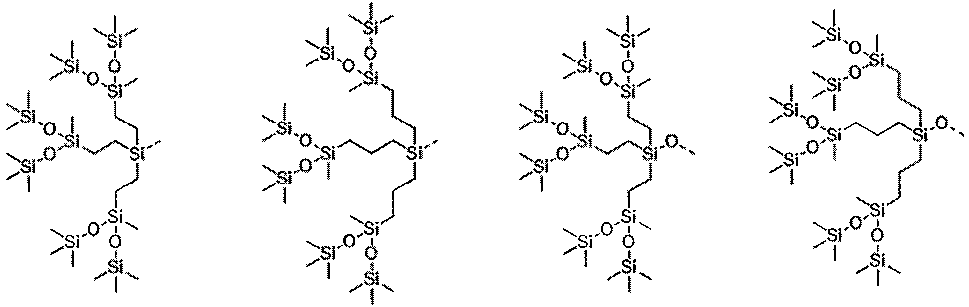

R⁴ is each independently a C₁₋₁₂ alkyl group, a phenyl group, or R³-(SiR^{4'}₂O)ₙ-.

In one embodiment, R⁴ is a C₁₋₁₂ alkyl group or a phenyl group.

In one embodiment, R⁴ is a C₁₋₁₂ alkyl group. In another embodiment, R⁴ is a phenyl group.

For example, the C₁₋₁₂ alkyl group in R⁴ may be linear or may be branched. In one embodiment, the C₁₋₁₂ alkyl group is linear. In another embodiment, the C₁₋₁₂ alkyl group is branched. The C₁₋₁₂ alkyl group is preferably a C₁₋₆ alkyl group, more preferably a C₁₋₃ alkyl group, even more preferably a methyl group or an ethyl group, and particularly preferably a methyl group.

In one embodiment, R⁴ is R³-(SiR^{4'}₂O)ₙ-. That is, the siloxane group in R¹ has a branched structure.

R^{4'} is each independently a C₁₋₁₂ alkyl group or a phenyl group.

In one embodiment, R^{4'} is a C₁₋₁₂ alkyl group. In another embodiment, R^{4'} is a phenyl group.

For example, the C₁₋₁₂ alkyl group in R^{4'} may be linear or may be branched. In one embodiment, the C₁₋₁₂ alkyl group is linear. In another embodiment, the C₁₋₁₂ alkyl group is branched. The C₁₋₁₂ alkyl group is preferably a C₁₋₆ alkyl group, more preferably a C₁₋₃ alkyl group, even more preferably a methyl group or an ethyl group, and particularly preferably a methyl group.

n is an integer of 1 to 1,500, preferably of 1 to 500, more preferably of 1 to 100, still more preferably of 1 to 20, yet still more preferably of 1 to 10, for example, 1 or 2.

In one embodiment, n is 10 to 500, more preferably 10 to 100, still more preferably 10 to 80, for example, 20 to 500, 20 to 100, 20 to 80, 30 to 80, 40 to 80, or 40 to 70. Within such a range of n, tactile sensation and surface lubricity of the obtained surface-treating layer are improved.

In another embodiment, n is 1 to 100, more preferably 1 to 50, even more preferably 10 to 30, such as 2 to 100, 2 to 50, 2 to 30, 5 to 100, 5 to 50, 5 to 30, or 5 to 20. Within such a range of n, the abrasion durability of the obtained surface-treating layer is improved.

In a preferable embodiment, R³ is methyl, R⁴ is methyl, and n is 1 or 2.

In one embodiment, R¹ may be a monovalent organic group containing one or more Si atoms to which neither a hydroxyl group nor a hydrolyzable group is directly bonded and not containing a siloxane bond.

In one embodiment, R¹ is a group of the following formula:

-SiR⁵₃

wherein
R⁵ is each independently a C₁₋₆ alkyl group, -SiR⁶₃ or -OSiR⁶₃, and
R⁶ is each independently a C₁₋₆ alkyl group.

For example, the C₁₋₆ alkyl group in R⁵ may be linear or may be branched. In one embodiment, the C₁₋₆ alkyl group is linear. In another embodiment, the C₁₋₆ alkyl group is branched. The C₁₋₆ alkyl group is preferably a C₁₋₄ alkyl group.

For example, the C₁₋₁₂ alkyl group in R⁶ may be linear or may be branched. In one embodiment, the C₁₋₁₂ alkyl group is linear. In another embodiment, the C₁₋₁₂ alkyl group is branched. The C₁₋₁₂ alkyl group is preferably a C₁₋₆ alkyl group, more preferably a C₁₋₃ alkyl group, even more preferably a methyl group or an ethyl group, and particularly preferably a methyl group.

The above-described SiR⁵₃ is preferably -Si(CH₃)₃, -Si(CH₂CH₃)₃, - Si(CH(CH₃)₂)₃, -Si(CH₃)(CH₃)(C(CH₃)₃), -Si(Si(CH₃)₃)₃, -Si(Si(CH₂CH₃)₃, and may be - Si(OSi(CH₃)₃)₃, -Si(CH₃)(OSi(CH₃)₃)₂, or -Si(OSi(CH₂CH₃)₃)₃.

In a preferred embodiment, SiR⁵₃ may be -Si(OSi(CH₃)₃)₃.

In a preferred embodiment, SiR⁵₃ may be Si(CH₃)(OSi(CH₃)₃)₂.

X¹ is a divalent organic group containing an amide bond.

X¹ is preferably a group of the following formula:

-R¹⁴-CONR¹³-R¹⁵-

wherein
R¹³ is a hydrogen atom, a C₁₋₆ alkyl group, or a phenyl group,
R¹⁴ is -(R⁵¹)ₚ₅-(X⁵¹)_{q5}-,
R⁵¹ is a single bond, -(CH₂)ₚ-, or an o-, m-, or p-phenylene group,
p5 is an integer of 0 to 30,
X⁵¹ is -(X⁵²)₁₅-,
X⁵² is each independently a group selected from the group consisting of -O-, -S-, an o-, m- or p-phenylene group, -CO-, -C(O)O-, -CONR⁵⁴-, -O-CONR⁵⁴-, -NR⁵⁴-, and - (CH₂)ₙ₅-,
R⁵⁴ is each independently a hydrogen atom or a monovalent organic group, and is preferably a hydrogen atom, a phenyl group, a C₁₋₆ alkyl group (preferably a methyl group), or an oxyalkylene-containing group having 1 to 10 carbon atoms,
n5 is each independently an integer of 1 to 20, preferably an integer of 1 to 15, more preferably an integer of 1 to 10, and even more preferably an integer of 1 to 6, such as an integer of 1 to 3,
l5 is an integer of 1 to 10, preferably an integer of 1 to 5, and more preferably an integer of 1 to 3,
p5 is 0 or 1,
q5 is 0 or 1,
R¹⁵ is a single bond, -(CH₂)_{q}-, or an o-, m-, or p-phenylene group, and
q is an integer of 1 to 10.

In one embodiment, X¹ is preferably a group of the following formula:

-(CH₂)ₚ-CONR¹³-(CH₂)_{q}-

wherein
R¹³ is a hydrogen atom, a C₁₋₆ alkyl group, or a phenyl group,
p is an integer of 0 to 30, preferably an integer of 1 to 30, and more preferably an integer of 3 to 30, and
q is an integer of 1 to 10, preferably an integer of 2 to 3.

In another embodiment, X¹ is preferably a group of the following formula:

-(CH₂)ₚ₁-O-(CH₂)ₚ₂-CONR¹³-(CH₂)_{q}-

wherein
R¹³ is a hydrogen atom, a C₁₋₆ alkyl group, or a phenyl group,
p1 is an integer of 1 to 10,
p2 is an integer of 1 to 10, and
q is an integer of 1 to 10.

In one embodiment, R¹³ is a hydrogen atom.

In another embodiment, R¹³ is a C₁₋₆ alkyl group or a phenyl group.

For example, the C₁₋₆ alkyl group in R¹³ may be linear or may be branched. In one embodiment, the C₁₋₆ alkyl group is linear. In another embodiment, the C₁₋₆ alkyl group is branched. The C₁₋₆ alkyl group is preferably a C₁₋₄ alkyl group.

In one embodiment, p is 0.

In another embodiment, p is an integer of 1 to 30, preferably an integer of 6 to 28, such as an integer of 10 to 26, an integer of 11 to 24, or an integer of 12 to 22.

q can be an integer of 1 to 10, preferably an integer of 2 to 6, such as an integer of 2 to 4.

In a preferred embodiment, p is an integer of 1 to 30, preferably an integer of 6 to 28, such as an integer of 10 to 26, an integer of 11 to 24, or an integer of 12 to 22; and q is an integer of 1 to 10, preferably an integer of 2 to 6, such as an integer of 2 to 4.

R¹¹ is each independently a hydroxyl group or a hydrolyzable group.

R¹¹ is preferably, each independently, a hydrolyzable group.

R¹¹ is preferably, each independently, -OR^{h}, -OCOR^{h}, -O-N=CR^{h}₂, -NR^{h}₂, -NHR^{h}, -NCO, or a halogen (in these formulae, R^{h} represents a substituted or unsubstituted C₁₋₄ alkyl group), and more preferably -OR^{h} (that is, an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group, and in another embodiment, R^{h} is an ethyl group.

R¹² is each independently a monovalent organic group. Such a monovalent organic group is a monovalent organic group excluding the hydrolyzable group.

In R¹², the monovalent organic group is preferably a C₁₋₂₀ alkyl group, more preferably a C₁₋₆ alkyl group, and even more preferably a methyl group.

In the formulae, n1 is an integer of 1 to 3, preferably an integer of 2 to 3, and more preferably 3.

In a preferred embodiment, the compound of the present disclosure is a compound, wherein
R¹ is a group of the following formula:

   R³-(SiR⁴₂O)ₙ-SiR⁴₂-

   wherein
R³ is a C₁₋₄ alkyl group,
R⁴ is a methyl group, and
n is an integer of 1 to 80, such as an integer of 1 to 30 or an integer of 20 to 80,
X¹ is a group of the following formula:

   -(CH₂)ₚ-CONR¹³-(CH₂)_{q}-

   -(CH₂)ₚ₁-O-(CH₂)ₚ₂-CONR¹³-(CH₂)_{q}-

   wherein
R¹³ is a hydrogen atom,
p is an integer of 1 to 30,
p1 is an integer of 1 to 10,
p2 is an integer of 1 to 10, and
q is an integer of 1 to 10,
R¹¹ is OCH₃, and
n1 is 3.

In a further preferable embodiment, the compound of the present disclosure is a compound, wherein
R¹ is R³-(SiR⁴₂O)ₙ-SiR⁴₂-,
R³ is a C₁₋₄ alkyl group or a group A,
the group A is [(CH₃)₃SiO]₂CH₃Si(CH₃)₂O- or [(CH₃)₃SiO]₃Si(CH₃)₂O-,
R⁴ is a methyl group,
n is 1 to 100,
X¹ is -(CH₂)ₚ-CONH-(CH₂)_{q}-,
P is an integer of 3 to 30, and
q is an integer of 2 to 3.

Examples of the compound of the present disclosure include the following compounds:

CH₃Si(CH₃)₂O(Si(CH₃)₂O)ₙSi(CH₃)₂(CH₂)₁₀CONHCH₂CH₂CH₂Si(OCH₃)₃,

CH₃(CH₂)₃(Si(CH₃)₂O)ₙSi(CH₃)₂(CH₂)₃OCH₂CONHCH₂CH₂CH₂Si(OCH₃)₃,

CH₃CH₂CH₂CH₂Si(CH₃)₂O(Si(CH₃)₂O)ₙSi(CH₃)₂CH₂CH₂CH₂OCH₂CONHCH₂CH₂CH ₂Si(OCH₃)₃,

[(CH₃)₃SiO]₂CH₃SiO(Si(CH₃)₂O)ₙSi(CH₃)₂CH₂CH₂CH₂CH₂CH₂CH₂CH₂CH₂CH₂CH₂C H₂CH₂CH₂CH₂CH₂CH₂CH₂CH₂CH₂CH₂CH₂CH₂CONHCH₂CH₂CH₂Si(OCH₃)₃,

and

[(CH₃)₃SiO]₃SiO(Si(CH₃)₂O)ₙSi(CH₃)₂CH₂CH₂CH₂CH₂CH₂CH₂CH₂CH₂CH₂CH₂CH₂C H₂CH₂CH₂CH₂CH₂CH₂CH₂CH₂CH₂CH₂CH₂CONHCH₂CH₂CH₂Si(OCH₃)₃,

wherein n is an integer of 2 to 80.

Examples of a preferable compound of the present disclosure include the following compounds:

CH₃Si(CH₃)₂O(Si(CH₃)₂O)ₙSi(CH₃)₂(CH₂)₁₀CONHCH₂CH₂CH₂Si(OCH₃)₃,

wherein n is an integer of 10 to 30,

CH₃(CH₂)₃(Si(CH₃)₂O)ₙSi(CH₃)₂(CH₂)₃OCH₂CONHCH₂CH₂CH₂Si(OCH₃)₃,

wherein n is an integer of 10 to 30,

CH₃CH₂CH₂CH₂Si(CH₃)₂O(Si(CH₃)₂O)ₙSi(CH₃)₂CH₂CH₂CH₂OCH₂CONHCH₂CH₂CH ₂Si(OCH₃)₃,

wherein n is an integer of 40 to 70,

[(CH₃)₃SiO]₂CH₃SiO(Si(CH₃)₂O)ₙSi(CH₃)₂CH₂CH₂CH₂CH₂CH₂CH₂CH₂CH₂CH₂CH₂C H₂CH₂CH₂CH₂CH₂CH₂CH₂CH₂CH₂CH₂CH₂CH₂CONHCH₂CH₂CH₂Si(OCH₃)₃,

wherein n is an integer of 5 to 20, and

[(CH₃)₃SiO]₃SiO(Si(CH₃)₂O)ₙSi(CH₃)₂CH₂CH₂CH₂CH₂CH₂CH₂CH₂CH₂CH₂CH₂CH₂C H₂CH₂CH₂CH₂CH₂CH₂CH₂CH₂CH₂CH₂CH₂CONHCH₂CH₂CH₂Si(OCH₃)₃,

wherein n is an integer of 5 to 20.

The silane compound may have, but is not limited to, a number average molecular weight of 5 × 10² to 1 × 10⁵. It is preferable that the silane compound of the above formula (1) or (2) has a number average molecular weight of preferably 1,000 to 30,000, and more preferably 1,500 to 10,000, from the viewpoint of abrasion durability. The "number average molecular weight" is defined as a value obtained by ¹H-NMR measurement.

The compound of the formula (1) can be produced, for example, by the following method.

First, an unsaturated carboxylic acid or an unsaturated carboxylic acid ester such as a compound of the formula:

CH₂=CH-R⁷¹-COR⁷²

wherein
R⁷¹ is a single bond or a divalent organic group, such as an alkylene group having 1 to 28 carbon atoms, and
R⁷² is a hydroxy group, a chlorine atom, or a C₁₋₆ alkoxy group

is reacted with a silane compound such as a compound of the formula:

   R³-(SiR⁴₂O)ₙ-SiR⁴₂-H
wherein
   R³ is a C₁₋₁₂ alkyl group or a phenyl group,
   R⁴ is each independently a C₁₋₁₂ alkyl group or a phenyl group, and
   n is 1 to 1,500
to give a polydimethylsiloxane group-containing carboxylic acid, the compound of the formula:

   R³-(SiR⁴₂O)ₙ-SiR⁴₂-CH₂CH₂-R⁷¹-COOR⁷².
Note that the polydimethylsiloxane group-containing carboxylic acid, which is commercially available compounds such as X-22-3710 manufactured by Shin-Etsu Chemical Co., Ltd. and MCR-B12 manufactured by Gelest, Inc., can be used. Next, the polydimethylsiloxane group-containing carboxylic acid is reacted with an amine derivative having a carbon-carbon double bond at its end, such as a compound of the formula:

   NH₂-R⁷⁴-CH=CH

   wherein
   R⁷⁴ is a single bond or a C₁₋₃₀ alkylene group
to give a compound represented by:

   R³-(SiR⁴₂O)ₙ-SiR⁴₂-CH₂CH₂-R⁷¹-CONH₂-R⁷⁴-CH=CH₂.
Finally, the compound obtained as described above can be reacted with a compound of the following formula:

   HSi(R⁷⁷)₃
wherein R⁷⁷ is a hydrolyzable group
to give the compound of the formula (1).

The present disclosure also provides an intermediate compound in production of the formula (1), which is a compound of the following formula (2):

R³-(SiR⁴₂O)ₙ-SiR⁴₂-(CH₂)ₚ-CONR¹³-(CH₂)_{q'}-CH=CH₂ (2)

wherein
R³ is a C₁₋₃₀ alkyl group or a phenyl group,
R⁴ is each independently a C₁₋₁₂ alkyl group, a phenyl group, or R³-(SiR^{4'}₂O)ₙ-,
R^{4'} is each independently a C₁₋₁₂ alkyl group or a phenyl group,
n is 1 to 1,500,
R¹³ is a hydrogen atom, a C₁₋₃₀ alkyl group, or a phenyl group,
p is an integer of 0 to 30, and
q' is an integer of 1 to 8.
Each symbol in the above formula includes the same aspect as in the formula (1).

Next, the surface-treating agent of the present invention will now be described.

The surface-treating agent of the present disclosure contains at least one compound of the formula (1).

In one embodiment, the surface-treating agent of the present disclosure is at least one compound itself that is of the formula (1).

In one embodiment, the content of the compound of the formula (1) is preferably 0.1 to 50.0% by mass, more preferably 1.0 to 30.0% by mass, even more preferably 5.0 to 25.0% by mass, and particularly preferably 10.0 to 20.0% by mass based on the entirety of the surface-treating agent.

In another embodiment, the content of the compound of the formula (1) is preferably 0.001 to 30% by mass, more preferably 0.01 to 10% by mass, even more preferably 0.05 to 5% by mass, and particularly preferably 0.05 to 2% by mass based on the entirety of the surface-treating agent.

In one embodiment, the surface-treating agent of the present disclosure may contain the compound of the formula (1) and a condensate in which the compound of the formula (1) has been at least partially condensed.

In the above embodiment, the content of the condensate may be preferably 40% by mass or less and more preferably 30% by mass or less based on the sum of the silane compound and the condensate. Here, the content of the condensate can be determined from, for example, the abundance ratio of the peak position to the area in GPC (gel permeation chromatography).

The surface-treating agent of the present disclosure may further comprise a compound of formula (3):

R²¹-R²²-CONR²⁴-R²³-SiR¹¹ₙ₁R¹²₃₋ₙ₁ (3)

wherein
R²¹ is CH₃CH₂CH₂-, CH₃CH=CH-, or R¹²₃₋ₙ₁R¹¹ₙ₁Si-,
R²² is a C₀₋₃₀ alkylene group,
R²³ is a C₁₋₁₀ alkylene group,
R²⁴ is a hydrogen atom, a C₁₋₃₀ alkyl group, or a phenyl group,
R¹¹ is each independently a hydroxyl group or a hydrolyzable group,
R¹² is each independently a hydrogen atom or a monovalent organic group,
n1 is an integer of 1 to 3.
The surface-treating agent of the present disclosure including the compound of the formula (3) further improves abrasion durability.

In one embodiment, R²¹ can be CH₃CH₂CH₂- and CH₃CH=CH-.

In one embodiment, R²² is a C₀ alkylene group. That is, it is a single bond.

In another embodiment, R²² may be a C₁₋₃₀ alkylene group, such as a C₁₋₁₀ alkylene group, a C₃₋₆ alkylene group, a C₆₋₃₀ alkylene group, a C₇₋₃₀ alkylene group, a C₈₋₃₀ alkylene group, or a C₉₋₃₀ alkylene group.

R²³ is a C₁₋₁₀ alkylene group, preferably a C₂₋₆ alkylene group, and more preferably a C₂₋₄ alkylene group, and
in one embodiment, R²⁴ is a hydrogen atom.

In another embodiment, R²⁴ is a C₁₋₆ alkyl group or a phenyl group.

For example, the C₁₋₆ alkyl group in R²⁴ may be linear or may be branched. In one embodiment, the C₁₋₆ alkyl group is linear. In another embodiment, the C₁₋₆ alkyl group is branched. The C₁₋₆ alkyl group is preferably a C₁₋₄ alkyl group.

R¹¹, R¹² and n have the same meaning as in the definition of formula (1).

The surface-treating agent according to the present disclosure may contain the compound of the formula (3) in an amount of preferably 0.1% by mass to 30% by mass, more preferably 0.5% by mass to 20% by mass, and still more preferably 1.0% by mass to 20% by mass, based on the total amount of the compound of the formula (1) and compound of the formula (3).

In one embodiment, the surface-treating agent of the present disclosure may contain the compound of the formula (3) in which R²⁴ is a C₁₋₆ alkyl group or a phenyl group, in an amount of preferably 0.5% by mass to 30% by mass and more preferably 1.0% by mass to 20% by mass, based on the total amount of the compound of the formula (1) and compound of the formula (3).

In one embodiment, the surface-treating agent of the present disclosure may contain the compound of the formula (3) in which R²⁴ is R¹²₃₋ₙ₁R¹¹ₙ₁Si-, in an amount of preferably 0.1% by mass to 3.0% by mass and more preferably 0.1% by mass to 1.0% by mass, based on the total amount of the compound of the formula (1) and compound of the formula (3).

The surface-treating agent of the present disclosure may contain a solvent, a (nonreactive) silicone compound that may be understood as a silicone oil (hereinafter, referred to as "silicone oil"), an amine compound, an alcohol, a catalyst, a surfactant, a polymerization inhibitor, a sensitizer, and the like.

In one embodiment, the surface-treating agent of the present disclosure may contain a solvent selected from compounds of R⁸¹OR⁸², R⁸³ₙ₈C₆H₆₋ₙ₈, R⁸⁴R⁸⁵R⁸⁶Si-(O-SiR⁸⁷R⁸⁸)ₘ₈-R⁸⁹, and (OSiR⁸⁷R⁸⁸)ₘ₉ wherein
R⁸¹ to R⁸⁹ are each independently a monovalent organic group having 1 to 10 carbon atoms,
m8 is an integer of 1 to 6,
m9 is an integer of 3 to 8, and
n8 is an integer of 0 to 6.

The monovalent organic group having 1 to 10 carbon atoms may be linear or may be branched, and may further contain a cyclic structure.

In one embodiment, the monovalent organic group having 1 to 10 carbon atoms may contain an oxygen atom, a nitrogen atom, or a halogen atom.

In another embodiment, the monovalent organic group having 1 to 10 carbon atoms does not contain a halogen atom.

In a preferred embodiment, the monovalent organic group having 1 to 10 carbon atoms is a hydrocarbon group optionally substituted with a halogen, and preferably a hydrocarbon group not substituted with a halogen.

In one embodiment, the hydrocarbon group is linear.

In another embodiment, the hydrocarbon group is branched.

In another embodiment, the hydrocarbon group contains a cyclic structure.

In one embodiment, the solvent is R⁸¹OR⁸².

R⁸¹ and R⁸² may be, each independently, preferably a hydrocarbon group having 1 to 8 carbon atoms, and more preferably a C₁₋₆ alkyl group or a C₅₋₈ cycloalkyl group.

In one embodiment, the solvent is R⁸³ₙ₈C₆H₆₋ₙ₈.

C₆H₆₋ₙ₈ is an n8-valent benzene ring. That is, R⁸³ₙ₈C₆H₆₋ₙ₈ is benzene substituted with n8 R⁸³ groups.

R⁸³ may be each independently a halogen, or a C₁₋₆ alkyl group optionally substituted with a halogen.

n8 is preferably an integer of 1 to 3.

In one embodiment, the solvent is R⁸⁴R⁸⁵R⁸⁶Si-(O-SiR⁸⁷R⁸⁸)ₘ₈-R⁸⁹.

In one embodiment, the solvent is (OSiR⁸⁷R⁸⁸)ₘ₉. (OSiR⁸⁷R⁸⁸)ₘ₉ is a cyclic siloxane formed by multiple OSiR⁸⁷R⁸⁸ units bonded in a cyclic form.

R⁸⁴ to R⁸⁹ are each independently a hydrogen atom or a C₁₋₆ alkyl group, preferably a C₁₋₆ alkyl group, more preferably a C₁₋₃ alkyl group, and still more preferably a methyl group.

m8 is preferably an integer of 1 to 6, more preferably an integer of 1 to 5, and even more preferably 1 to 2.

m9 is preferably an integer of 3 to 6, and more preferably an integer of 3 to 5.

In one embodiment, the solvent for use may be, for example, aliphatic hydrocarbons such as hexane, cyclohexane, heptane, octane, nonane, decane, undecane, dodecane, and mineral spirits; aromatic hydrocarbons such as benzene, toluene, xylene, naphthalene, and solvent naphtha; esters such as methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate; ketones such as acetone, methyl ethyl ketone, methyl isobutyl ketone, 2-hexanone, cyclohexanone, methyl amino ketone, and 2-heptanone; glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, and ethylene glycol monoalkyl ether; alcohols such as methanol, ethanol, iso-propanol, n-butanol, isobutanol, tert-butanol, sec-butanol, 3-pentanol, octyl alcohol, 3-methyl-3-methoxybutanol, and tert-amyl alcohol; glycols such as ethylene glycol and propylene glycol; cyclic ethers such as tetrahydrofuran, tetrahydropyran, and dioxane; amides such as N,N-dimethylformamide, N,N-dimethylacetamide, and N-methylpyrrolidone; ether alcohols such as methyl cellosolve, cellosolve, isopropyl cellosolve, butyl cellosolve, and diethylene glycol monomethyl ether; diethylene glycol monoethyl ether acetate; polyfluoroaromatic hydrocarbons (for example, 1,3-bis(trifluoromethyl)benzene); polyfluoroaliphatic hydrocarbons (for example, C₆F₁₃CH₂CH₃ (for example, ASAHIKLIN(R) AC-6000 manufactured by AGC Inc.), and 1,1,2,2,3,3,4-heptafluorocyclopentane (for example, Zeorolla(R) H manufactured by ZEON Corporation); ether alcohols such as hydrofluoroethers (HFE) (for example, alkyl perfluoroalkyl ethers (the perfluoroalkyl group and the alkyl group may be linear or branched), such as perfluoropropyl methyl ether (C₃F₇OCH₃) (for example, Novec(TM) 7000 manufactured by SUMITOMO 3M LIMITED), perfluorobutyl methyl ether (C₄F₉OCH₃) (for example, Novec(TM) 7100 manufactured by SUMITOMO 3M LIMITED), perfluorobutyl ethyl ether (C₄F₉OC₂H₅) (for example, Novec(TM) 7200 manufactured by SUMITOMO 3M LIMITED), and perfluorohexyl methyl ether (C₂F₅CF(OCH₃)C₃F₇) (for example, Novec(TM) 7300 manufactured by SUMITOMO 3M LIMITED), or CF₃CH₂OCF₂CHF₂ (for example, ASAHIKLIN(R) AE-3000 manufactured by AGC Inc.)) and cyclopentyl methyl ether; siloxanes such as hexamethyldisiloxane, hexaethyldisiloxane, octamethyltrisiloxane, octamethylcyclotetrasiloxane, octamethylcyclopentasiloxane, decamethyltetrasiloxane, dodecamethylpentasiloxane, and tetradecamethylhexasiloxane; and the like. One of these solvents may be used singly, or two or more may be used as a mixture. Of these, aliphatic hydrocarbons, aromatic hydrocarbons, esters, glycol ethers, alcohols, ether alcohols, and siloxanes are preferred. Particularly preferred are, for example, hexane, cyclohexane, heptane, octane, nonane, decane, undecane, dodecane, mineral spirits, benzene, toluene, xylene, naphthalene, methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, ethyl 2-hydroxyisobutyrate, propylene glycol monomethyl ether, propylene glycol monoethyl ether, propylene glycol monobutyl ether, methanol, ethanol, isopropanol, n-butanol, isobutanol, tert-butanol, sec-butanol, diethylene glycol monomethyl ether, hexamethyldisiloxane, hexaethyldisiloxane, octamethyltrisiloxane, decamethyltetrasiloxane, dodecamethylpentasiloxane, tetradecamethylhexasiloxane, octamethylcyclotetrasiloxane, and octamethylcyclopentasiloxane.

Examples of the silicone oil include, but are not limited to, compounds of the following general formula (3a):

R^{1a}-(SiR^{3a}₂-O)ₐ₁-SiR^{3a}₂-R^{1a} (3a)

wherein
R^{1a} is each independently a hydrogen atom or a hydrocarbon group,
R^{3a} is each independently a hydrogen atom or a hydrocarbon group, and
a1 is 2 to 3,000.

R^{3a} is each independently a hydrogen atom or a hydrocarbon group. Such a hydrocarbon group is optionally substituted.

R^{3a} is, each independently, preferably an unsubstituted hydrocarbon group or a hydrocarbon group substituted with a halogen atom. Such a halogen atom is preferably a fluorine atom.

R^{3a} is, each independently, preferably a C₁₋₆ alkyl group or aryl group optionally substituted with a halogen atom, and more preferably a C₁₋₆ alkyl group or aryl group.

For example, the C₁₋₆ alkyl group may be linear or branched, but is preferably linear. The C₁₋₆ alkyl group is preferably a C₁₋₃ alkyl group, and more preferably a methyl group.

The aryl group is preferably a phenyl group.

In one embodiment, R^{3a} is each independently a C₁₋₆ alkyl group, preferably a C₁₋₃ alkyl group, and more preferably a methyl group.

In another embodiment, R^{3a} is a phenyl group.

In another embodiment, R^{3a} is a methyl group or a phenyl group, and preferably a methyl group.

R^{1a} is each independently a hydrogen atom or a hydrocarbon group, and has the same meaning as R^{3a}.

R^{1a} is, each independently, preferably a C₁₋₆ alkyl group or aryl group optionally substituted with a halogen atom, and more preferably a C₁₋₆ alkyl group or aryl group.

In one embodiment, R^{1a} is each independently a C₁₋₆ alkyl group, preferably a C₁₋₃ alkyl group, and more preferably a methyl group.

In another embodiment, R^{1a} is a phenyl group.

In another embodiment, R^{1a} is a methyl group or a phenyl group, and preferably a methyl group.

a1 is 2 to 1,500. al may be preferably 5 or more, more preferably 10 or more, and even more preferably 15 or more, such as 30 or more or 50 or more. a1 may be preferably 1,000 or less, more preferably 500 or less, even more preferably 200 or less, and even more preferably 150 or less, such as 100 or less or 80 or less.

a1 may be preferably 5 to 1,000, more preferably 10 to 500, even more preferably 15 to 200, and even more preferably 15 to 150.

Other examples of the silicone oil include compounds of (3b) below:

R^{1a}-R^{S2}-R^{3a} (3b)

wherein
R^{1a} is each independently a hydrocarbon group,
R^{3a} is each independently a hydrocarbon group, and
R^{S2} has the same meaning as described for the formula (2).

The silicone oil may have an average molecular weight of 500 to 1,000,000, and preferably 1,000 to 100,000. The molecular weight of the silicone oil may be measured using GPC.

The silicone oil may be, for example, a linear or cyclic silicone oil in which a1 in -(SiR^{3a}₂-O)ₐ₁- is 30 or less. The linear silicone oil may be a so-called straight silicone oil or modified silicone oil. Examples of the straight silicone oil include dimethyl silicone oil, methyl phenyl silicone oil, and methyl hydrogen silicone oil. Examples of the modified silicone oil include those obtained by modifying a straight silicone oil with alkyl, aralkyl, polyether, higher fatty acid ester, fluoroalkyl, amino, epoxy, carboxyl, alcohol, or the like. Examples of the cyclic silicone oil include cyclic dimethylsiloxane oil.

The silicone oil may be contained in an amount of, for example, 0 to 50% by mass, preferably 0.001 to 30% by mass, and more preferably 0.1 to 5% by mass based on the surface-treating agent of the present disclosure.

In the surface-treating agent of the present disclosure, the silicone oil may be contained in an amount of, for example, 0 to 300 parts by mass, preferably 0 to 100 parts by mass, more preferably 0 to 50 parts by mass, and even more preferably 0 to 10 parts by mass, based on total 100 parts by mass of the compound of the present disclosure (in the case of two or more kinds, the total thereof, and the same applies below).

The silicone oil contributes to improving the surface lubricity of the surface-treating layer.

Examples of the alcohol include methanol, ethanol, iso-propanol, n-butanol, isobutanol, tert-butanol, sec-butanol, 3-pentanol, octyl alcohol, 3-methyl-3-methoxybutanol, and tert-amyl alcohol. Such an alcohol added to the surface-treating agent increases the stability of the surface-treating agent.

Examples of the catalyst include acids (for example, acetic acid, hydrochloric acid, nitric acid, sulfuric acid, phosphoric acid, sulfonic acid, p-toluenesulfonic acid, trifluoroacetic acid, and the like), bases (for example, sodium hydroxide, potassium hydroxide, ammonia, triethylamine, diethylamine, and the like), transition metals (for example, Ti, Ni, Sn, Zr, Al, B, Si, Ta, Nb, Mo, W, Cr, Hf, V, and the like), and sulfur-containing compounds or nitrogen-containing compounds having an unshared electron pair in the molecular structure (for example, sulfoxide compounds, aliphatic amine compounds, aromatic amine compounds, phosphoric acid amide compounds, amide compounds, and urea compounds).

Examples of the aliphatic amine compounds may include diethylamine and triethylamine. Examples of the aromatic amine compounds may include aniline and pyridine.

In a preferable embodiment, the transition metal is contained as a transition metal compound of M-R, wherein M is a transition metal atom and R is a hydrolyzable group. By using a compound obtained by bonding a transition metal and a hydrolyzable group as the transition metal compound, the transition metal atom can be contained in the surface-treating layer more efficiently, and the abrasion durability and the chemical resistance of the surface-treating layer can be more increased.

The hydrolyzable group means a group that can undergo a hydrolysis reaction in the same manner as the hydrolyzable group concerning the above compound, i.e., means a group that can be removed from the transition metal atom by a hydrolysis reaction. Examples of the hydrolyzable group include -OR^{m}, -OCOR^{m}, -O-N=CR^{m}₂, -NR^{m}₂, - NHR^{m}, -NCO, and a halogen (in these formulae, R^{m} represents a substituted or unsubstituted C₁₋₄ alkyl group).

In a preferable embodiment, the hydrolyzable group is -OR^{m}, and preferably methoxy or ethoxy. By using an alkoxy group as the hydrolyzable group, the transition metal atom can be contained in the surface-treating layer more efficiently, and the abrasion durability and the chemical resistance of the surface-treating layer can be more increased.

For example, in one embodiment, the hydrolyzable group may be the same as the hydrolyzable group contained in the above compound. By causing the hydrolyzable groups in the compound and in the transition metal compound to be the same group, the influence of such hydrolyzable groups being mutually exchanged, if ever, can be minimized.

In another embodiment, the hydrolyzable group may be different from the hydrolyzable group contained in the above compound. By causing the hydrolyzable groups in the above compound and in the transition metal compound to be different, the reactivity of hydrolysis can be controlled.

In one embodiment, the above hydrolyzable group and the hydrolyzable group contained in the above compound may be mutually exchanged in the surface-treating agent.

In a preferable embodiment, the transition metal compound may be Ta(OR^{m})₅ (wherein R^{m} is a substituted or unsubstituted C₁₋₄ alkyl group), preferably Ta(OCH₂CH₃)₅ or Si(OR^{m})₁₋ₘ₁R^{m'}ₘ₁ (wherein R^{m} is a substituted or unsubstituted C₁₋₄ alkyl group, R^{m'} is a C₁₋₄ alkyl group, and m1 is 0 or 1), and preferably tetraethoxysilane, methyltrimethoxysilane, methyltriethoxysilane, tetraisopropoxysilane, dimethyldiethoxysilane, or dimethyldimethoxysilane.

The catalyst may be contained in an amount of, for example, 0.0002% by mass or more based on the entirety of the surface-treating agent. The catalyst may be contained in an amount of preferably 0.02% by mass or more, and more preferably 0.04% by mass or more, based on the entirety of the surface-treating agent. The catalyst may be contained in an amount of, for example, 10% by mass or less based on the entirety of the surface-treating agent, and in particular, it is contained in an amount of 1% by mass or less. The surface-treating agent of the present disclosure can contribute to the formation of a surface-treating layer with better durability when the catalyst is contained in the concentration as described above.

The content of the catalyst is preferably 0 to 10% by mass, more preferably 0 to 5% by mass, and particularly preferably 0 to 1% by mass, based on the compound of the present disclosure.

The catalyst promotes hydrolysis and dehydrative condensation of the compound of the present disclosure, and promotes formation of a layer formed of the surface-treating agent of the present disclosure.

Examples of other components include, in addition to those described above, tetraethoxysilane, methyltrimethoxysilane, 3-aminopropyltrimethoxysilane, 3-glycidoxypropyltrimethoxysilane, and methyltriacetoxysilane.

The surface-treating agent of the present disclosure may contain, in addition to the components described above, trace amounts of Pt, Rh, Ru, 1,3-divinyltetramethyldisiloxane, triphenylphosphine, NaCl, KCl, silane condensation product, and the like as impurities.

In one embodiment, the surface-treating agent of the present disclosure is for a dry coating method, preferably for vacuum deposition.

In one embodiment, the surface-treating agent of the present disclosure is for a wet coating method, preferably for dip coating.

The surface-treating agent of the present disclosure can be formed into pellets by impregnating a porous material such as a porous ceramic material or a metal fiber such as a fiber obtained by, for example, solidifying steel wool in a cotton-like form therewith. Such pellets can be used in, for example, vacuum deposition.

Hereinafter, an article of the present disclosure will be described.

The article of the present disclosure includes a substrate and a layer (surface-treating layer) on the substrate surface, the layer being formed of the surface-treating agent of the present disclosure.

The substrate usable in the present disclosure may be composed of any suitable material such as glass, resin (which may be natural or synthetic resin such as a commonly used plastic material), metal, ceramics, semiconductors (such as silicon and germanium), fiber (such as woven fabric and nonwoven fabric), fur, leather, wood, pottery, stone, building materials, and sanitary articles.

For example, when the article to be produced is an optical member, the material constituting the surface of the substrate may be a material for an optical member, such as glass or a transparent plastic. When the article to be produced is an optical member, some layer (or film), such as a hard coat layer or an antireflection layer, may be formed on the surface (the outermost layer) of the substrate. The antireflection layer may be any of a single-layer antireflection layer and a multi-layer antireflection layer. Examples of inorganic substances usable in the antireflection layer include SiO₂, SiO, ZrO₂, TiO₂, TiO, Ti₂O₃, Ti₂O₅, Al₂O₃, Ta₂O₅, Ta₃O₅, Nb₂O₅, HfO₂, Si₃N₄, CeO₂, MgO, Y₂O₃, SnO₂, MgF₂, and WO₃. One of these inorganic substances may be used singly, or two or more types thereof may be used in combination (for example, as a mixture). In the case of a multi-layer antireflection layer, it is preferable to use SiO₂ and/or SiO for the outermost layer thereof. When the article to be produced is an optical glass component for a touch panel, a part of the surface of the substrate (glass) may have a transparent electrode such as a thin film in which indium tin oxide (ITO), indium zinc oxide, or the like is used. The substrate, according to its specific configuration or the like, may have an insulating layer, an adhesive layer, a protecting layer, a decorated frame layer (I-CON), an atomizing film layer, a hard coating layer, a polarizing film, a phase difference film, a liquid crystal display module, or the like.

The shape of the substrate is not limited, and may be, for example, in the form of a plate, a film, or the like. The surface region of the substrate on which a surface-treating layer is to be formed may be at least a portion of the substrate surface, and may be suitably determined according to the application, specific configuration, and the like of an article to be produced.

In one embodiment, the substrate, or at least the surface portion thereof, may be composed of a material originally having a hydroxyl group. Examples of the material include glass, as well as metal (in particular, base metal) where a natural oxidized film or a thermal oxidized film is formed on the surface, ceramics, and semiconductors. Alternatively, when the substrate has an insufficient amount of hydroxyl group or when the substrate originally has no hydroxyl group as in a resin and the like, a pre-treatment may be performed on the substrate to thereby introduce or increase hydroxyl groups on the surface of the substrate. Examples of such a pre-treatment include a plasma treatment (for example, corona discharge) and ion beam irradiation. The plasma treatment can be suitably utilized to not only introduce or increase hydroxyl groups on the substrate surface, but also clean the substrate surface (remove foreign matter and the like). Another example of such a pre-treatment is a method wherein a monolayer of a surface adsorbent having a carbon-carbon unsaturated bonding group is formed on the surface of the substrate by a LB method (a Langmuir-Blodgett method), a chemical adsorption method, or the like beforehand, and thereafter cleaving the unsaturated bond under an atmosphere containing oxygen, nitrogen, or the like.

For example, in another embodiment, the substrate, or at least the surface portion thereof, may be composed of a material comprising another reactive group such as a silicone compound having one or more Si-H groups or alkoxysilane.

In a preferred embodiment, the substrate is glass. As such glass, preferred are sapphire glass, soda-lime glass, alkali aluminosilicate glass, borosilicate glass, alkali-free glass, crystal glass, quartz glass, and crystallized glass, and particularly preferred are chemically strengthened soda-lime glass, chemically strengthened alkali aluminosilicate glass, and chemically bonded borosilicate glass.

In one embodiment, the article of the present disclosure may include a silicon oxide containing intermediate layer between the glass and the surface-treating layer. By providing such an intermediate layer, the adhesion between the glass and the surface-treating layer is improved, and the durability is improved.

In a preferred embodiment, the intermediate layer may contain an alkali metal in addition to silicon oxide.

Examples of the alkali metal include lithium, sodium, and potassium. The alkali metal is preferably sodium.

The thickness of the intermediate layer is not limited, and it is preferably 1 to 200 nm, and particularly preferably 1 to 20 nm. By setting the thickness of the intermediate layer to the lower limit value of the above range or more, the improvement effect of adhesion by the intermediate layer becomes greater.

The concentration of alkali metal atoms in the intermediate layer can be measured by various surface analysis apparatuses such as TOF-SIMS, XPS, and XRF.

The proportion of alkali metal atoms in all atoms of the entire intermediate layer can be obtained by XPS depth profile analysis by ion sputtering, which is performed by alternately repeating XPS measurements and etching of the surface by ion sputtering using an ion gun built into the XPS device.

In the intermediate layer, the average value of the concentration of alkali metal in the area with a depth of 1 nm or less from the surface in contact with the surface-treating layer is determined by obtaining the depth profile of the concentration of alkali metal atoms by TOF-SIMS (time-of-flight secondary ion mass spectrometry) depth profile analysis by ion sputtering, and then calculating the average value of the concentration of alkali metal atoms in the profile. The TOF-SIMS depth profile analysis by ion sputtering is performed by alternately repeating TOF-SIMS measurements and etching of the surface by ion sputtering using an ion gun built into the TOF-SIMS device.

The article of the present disclosure can be produced by forming a layer of the surface-treating agent of the present disclosure on the surface of the substrate and post-treating this layer as necessary, thereby forming a layer from the surface-treating agent of the present disclosure.

The layer of the surface-treating agent of the present disclosure can be formed by applying the surface-treating agent on the surface of the substrate such that the surface-treating agent coats the surface. The coating method is not limited. For example, a wet coating method and a dry coating method can be used.

Examples of the wet coating method include dip coating, spin coating, flow coating, spray coating, roll coating, gravure coating, wipe coating, squeegee coat method, die coat, inkjet, cast method, Langmuir-Blodgett method, and similar methods.

Examples of the dry coating method include deposition (usually, vacuum deposition), sputtering, CVD, and similar methods. Specific examples of the deposition method (usually, a vacuum deposition method) include resistive heating, high-frequency heating using electron beam, microwave, or the like, ion beam, and similar methods. Specific examples of the CVD method include plasma-CVD, optical CVD, thermal CVD, and similar methods.

Furthermore, coating by an atmospheric pressure plasma method can be performed.

When using the wet coating method, the surface-treating agent of the present disclosure can be applied to the substrate surface after being diluted with a solvent. From the viewpoint of the stability of the composition of the present disclosure and the volatility of the solvent, the following solvents are preferably used: aliphatic hydrocarbons such as hexane, cyclohexane, heptane, octane, nonane, decane, undecane, dodecane, and mineral spirits; aromatic hydrocarbons such as benzene, toluene, xylene, naphthalene, and solvent naphtha; esters such as methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate; ketones such as acetone, methyl ethyl ketone, methyl isobutyl ketone, 2-hexanone, cyclohexanone, methyl amino ketone, and 2-heptanone; glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, and ethylene glycol monoalkyl ether; alcohols such as methanol, ethanol, iso-propanol, n-butanol, isobutanol, tert-butanol, sec-butanol, 3-pentanol, octyl alcohol, 3-methyl-3-methoxybutanol, and tert-amyl alcohol; glycols such as ethylene glycol and propylene glycol; cyclic ethers such as tetrahydrofuran, tetrahydropyran, and dioxane; amides such as N,N-dimethylformamide, N,N-dimethylacetamide, and N-methylpyrrolidone; ether alcohols such as methyl cellosolve, cellosolve, isopropyl cellosolve, butyl cellosolve, and diethylene glycol monomethyl ether; diethylene glycol monoethyl ether acetate; polyfluoroaromatic hydrocarbons (for example, 1,3-bis(trifluoromethyl)benzene); polyfluoroaliphatic hydrocarbons (for example, C₆F₁₃CH₂CH₃ (for example, ASAHIKLIN(R) AC-6000 manufactured by AGC Inc.), and 1,1,2,2,3,3,4-heptafluorocyclopentane (for example, Zeorolla(R) H manufactured by ZEON Corporation); ether alcohols such as hydrofluoroethers (HFE) (for example, alkyl perfluoroalkyl ethers (the perfluoroalkyl group and the alkyl group may be linear or branched), such as perfluoropropyl methyl ether (C₃F₇OCH₃) (for example, Novec(TM) 7000 manufactured by SUMITOMO 3M LIMITED), perfluorobutyl methyl ether (C₄F₉OCH₃) (for example, Novec(TM) 7100 manufactured by SUMITOMO 3M LIMITED), perfluorobutyl ethyl ether (C₄F₉OC₂H₅) (for example, Novec(TM) 7200 manufactured by SUMITOMO 3M LIMITED), and perfluorohexyl methyl ether (C₂F₅CF(OCH₃)C₃F₇) (for example, Novec(TM) 7300 manufactured by SUMITOMO 3M LIMITED), or CF₃CH₂OCF₂CHF₂ (for example, ASAHIKLIN(R) AE-3000 manufactured by AGC Inc.)) and cyclopentyl methyl ether; siloxanes such as hexamethyldisiloxane, hexaethyldisiloxane, octamethyltrisiloxane, octamethylcyclotetrasiloxane, octamethylcyclopentasiloxane, decamethyltetrasiloxane, dodecamethylpentasiloxane, and tetradecamethylhexasiloxane; and the like. One of these solvents may be used singly, or two or more may be used as a mixture. Of these, aliphatic hydrocarbons, aromatic hydrocarbons, esters, glycol ethers, alcohols, ether alcohols, and siloxanes are preferred. Particularly preferred are, for example, hexane, cyclohexane, heptane, octane, nonane, decane, undecane, dodecane, mineral spirits, benzene, toluene, xylene, naphthalene, methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, ethyl 2-hydroxyisobutyrate, propylene glycol monomethyl ether, propylene glycol monoethyl ether, propylene glycol monobutyl ether, methanol, ethanol, isopropanol, n-butanol, isobutanol, tert-butanol, sec-butanol, diethylene glycol monomethyl ether, hexamethyldisiloxane, hexaethyldisiloxane, octamethyltrisiloxane, decamethyltetrasiloxane, dodecamethylpentasiloxane, tetradecamethylhexasiloxane, octamethylcyclotetrasiloxane, and octamethylcyclopentasiloxane.

When using the dry coating method, the surface-treating agent of the present disclosure may be directly subjected to the dry coating method, or may be diluted with the solvent before being subjected to the dry coating method.

A layer of the surface-treating agent is preferably formed such that the surface-treating agent of the present disclosure coexists in the layer with a catalyst for hydrolysis and dehydration condensation. Conveniently, in the case of a wet coating method, the surface-treating agent of the present disclosure is diluted with a solvent, and then, immediately before application to the substrate surface, a catalyst may be added to the diluted solution of the surface-treating agent of the present disclosure. In the case of a dry coating method, the surface-treating agent of the present disclosure to which a catalyst has been added is directly used to a deposition (usually vacuum deposition) treatment, or a pellet-like material may be used to a deposition (usually vacuum deposition) treatment, wherein the pellets are obtained by impregnating a porous body of metal such as iron or copper with the surface-treating agent of the present disclosure to which the catalyst has been added.

The catalyst may be any suitable acid or base, transition metal (such as Ti, Ni, Sn, Zr, Al, or B), sulfur-containing compound or nitrogen-containing compound having an unshared electron pair in the molecular structure (such as a sulfoxide compound, an aliphatic amine compound, an aromatic amine compound, a phosphoric acid amide compound, an amide compound, or an urea compound), or the like. The acid catalyst may be, for example, acetic acid, formic acid, trifluoroacetic acid, hydrochloric acid, nitric acid, sulfuric acid, phosphoric acid, sulfonic acid, methanesulfonic acid, or p-toluenesulfonic acid. Also, as the base catalyst, for example, ammonia, sodium hydroxide, potassium hydroxide, organic amines such as triethylamine and diethylamine, and the like can be used. Examples of the transition metals, aliphatic amine compounds, and aromatic amine compounds include the same as those described above.

The surface-treating layer included in the article of the present disclosure has both high abrasion durability and fingerprint removability by wiping. Moreover, the surface-treating layer may have not only high abrasion durability but also have, depending on the composition of the surface-treating agent used, water-repellency, oil-repellency, antifouling properties (e.g., preventing grime such as fingerprints from adhering), waterproof properties (preventing water from entering electronic components and the like), surface lubricity (or lubricity, for example, such as removability by wiping of grime such as fingerprints, and excellent tactile sensations to the fingers), chemical resistance, and the like, and may be suitably used as a functional thin film.

Therefore, the present disclosure further relates to an optical material having the surface-treating layer in the outermost layer.

The optical material preferably includes a wide variety of optical materials, in addition to optical materials relating to displays and the like as exemplified below: for example, displays such as cathode ray tubes (CRTs; for example, PC monitors), liquid crystal displays, plasma displays, organic EL displays, inorganic thin-film EL dot matrix displays, rear projection displays, vacuum fluorescent displays (VFDs), field emission displays (FEDs); protective plates for such displays; and those obtained by performing an antireflection film treatment on their surfaces.

The article of the present disclosure may be, but is not limited to, an optical member. Examples of the optical member include lenses of glasses or the like; front surface protective plates, antireflection plates, polarizing plates, and anti-glare plates for displays such as PDPs and LCDs; touch panel sheets for equipment such as cell phones and portable information terminals; disc surfaces of optical discs such as Blu-ray (R) discs, DVD discs, CD-Rs, and MOs; optical fibers; and display surfaces of watches and clocks.

For example, the article of the present disclosure may be medical equipment or a medical material. For example, the article having a layer that is obtained according to the present disclosure may be an automobile interior or exterior member. Examples of the exterior material are as follows: windows, light covers, and external camera covers. Examples of the interior material include the following: instrument panel covers, navigation system touch panels, and decorative interior materials.

The thickness of the layer is not limited. The thickness of the layer in the case of an optical member is in the range of 1 to 50 nm, 1 to 30 nm, and preferably 1 to 15 nm, from the viewpoint of optical performance, abrasion durability, and antifouling properties.

The silicon oxide-containing intermediate layer described above can be formed by applying a silicon oxide precursor to the substrate surface. When the intermediate layer contains an alkali metal, the intermediate layer can be formed by applying a composition containing a silicon oxide precursor and an alkali metal source to the substrate surface.

Examples of the silicon oxide precursor include silicic acid, a partial condensate of silicic acid, an alkali metal silicate, a silane compound having a hydrolyzable group that is bonded to a silicon atom, and a partially hydrolyzed condensate of such a silane compound. Silicic acid and a partial condensate thereof can be converted to silicon oxide by dehydrative condensation, and an alkali metal silicate can be converted to silicon oxide by being converted first to silicic acid or a partial condensate thereof with an acid or a cation exchange resin and then dehydratively condensing the resulting silicic acid or partial condensate thereof. Examples of the hydrolyzable group in the silane compound having a hydrolyzable group that is bonded to a silicon atom include an alkoxy group and a chlorine atom. The hydrolyzable group of the silane compound can be hydrolyzed to give a hydroxyl group, and the resulting silanol compound can be dehydratively condensed to give silicon oxide. Examples of the silane compound having a hydrolyzable group that is bonded to a silicon atom include alkoxysilanes such as tetraalkoxysilane and alkyltrialkoxysilane, and tetrachlorosilane.

The alkali metal source includes alkali metal hydroxides, water-soluble alkali metal salts, and the like. Examples of the water-soluble alkali metal salts include alkali metal carbonates, alkali metal hydrogen carbonates, alkali metal hydrochlorides, and alkali metal nitrates. The alkali metal source is preferably an alkali metal hydroxide and an alkali metal carbonate.

Note that the alkali metal silicate can be used as a silicon oxide precursor and an alkali metal source. The alkali metal silicate can be converted to silicon oxide via silicic acid, and in this process, a small amount of alkali metal may remain in the produced silicon oxide. Accordingly, regulating the amount of the remaining alkali metal enables silicon oxide containing a predetermined amount of alkali metal atom to be obtained.

So far, the compound, the composition, and the article of the present disclosure have been described in detail. The compound, the composition, the article, and the like of the present disclosure are not limited to those exemplified above.

### Examples

Hereinafter, the present disclosure will now be described by way of Examples, but the present disclosure is not limited to the following Examples.

In the following Examples, the number of repeating units of siloxane n was calculated by ¹H-NMR.

### (Synthetic Example 1)

5.01 g of CH₃Si(CH₃)₂O(Si(CH₃)₂O)ₙSi(CH₃)₂(CH₂)₁₀COOH, 15.0 g of tetrahydrofuran, 0.99 g of 1-(3-dimethylaminopropyl)-3-ethylcarbodiimide hydrochloride, 0.047 g of 4-dimethylaminopyridine, and 0.38 mL of allylamine were added, respectively, and stirred at room temperature overnight. Thereafter, purification was carried out to obtain 4.80 g of polydimethylsiloxane group-containing compound (1), CH₃Si(CH₃)₂O(Si(CH₃)₂O)ₙSi(CH₃)₂(CH₂)₁₀CONHCH₂CH=CH₂ (n ≈ 16).

¹H-NMR (CDCl₃, 400 MHz) δ [ppm]: -0.124-0.279 (m), 0.486-0.523 (t), 1.243-1.269 (m), 1.617 (bs), 2.161-2.196 (t), 3.859 (bs), 5.083-5.175 (m), 5.781-5.848 (m)

### (Synthetic Example 2)

4.34 g of the polydimethylsiloxane group-containing compound (1), CH₃Si(CH₃)₂O(Si(CH₃)₂O)ₙSi(CH₃)₂(CH₂)₁₀CONHCH₂CH=CH₂ obtained in Synthesis Example 1, 13.09 g of toluene, 0.035 g of triacetoxymethylsilane, and 0.15 ml of a xylene solution containing a 2% Pt complex of 1,3-divinyl-1,1,3,3-tetramethyldisiloxane were added, respectively, followed by charging 0.61 mL of trichlorosilane, heating to 60°C, and stirring for 4 hours. Thereafter, the volatiles were distilled off under reduced pressure, and then a mixed solution of 0.280 g of methanol and 6.340 g of trimethyl orthoformate was added, followed by heating to 50°C and stirring for 3 hours. Purification was then carried out to obtain 4.24 g of compound (2) having a trimethoxysilyl group at the end, CH₃Si(CH₃)₂O(Si(CH₃)₂O)ₙSi(CH₃)₂(CH₂)₁₀CONHCH₂CH₂CH₂Si(OCH₃)₃ (n ≈ 16).

¹H-NMR (CDCl₃, 400 MHz) δ [ppm]: -0.010-0.157 (m), 0.495-0.666 (m), 1.251-1.274 (m), 1.578-1.654 (m), 2.123-2.312 (m), 3.218-3.267 (m), 3.420-3.605 (m)

### (Synthetic Example 3)

5.00 g of CH₃CH₂CH₂CH₂(Si(CH₃)₂O)ₙSi(CH₃)₂(CH₂)₁₀COOH, 15.1 g of tetrahydrofuran, 0.97 g of 1-(3-dimethylaminopropyl)-3-ethylcarbodiimide hydrochloride, 0.048 g of 4-dimethylaminopyridine, and 0.38 mL of allylamine were added, respectively, and stirred at room temperature overnight. Purification was then carried out to obtain 4.07 g of polydimethylsiloxane group-containing compound (3), CH₃CH₂CH₂CH₂(Si(CH₃)₂O)ₙSi(CH₃)₂(CH₂)₁₀CONHCH₂CH=CH₂ (n ≈ 16).

¹H-NMR (CDCl₃, 400 MHz) δ [ppm]: -0.114-0.291 (m), 0.507-0.547 (m), 0.855-0.890 (t), 1.180-1.320 (m), 1.577-1.629 (m), 1.948-2.049 (m), 2.197-2.327 (m), 3.893 (s), 5.102-5.191 (m), 5.388-5.394 (m), 5.754-5.823 (m)

### (Synthetic Example 4)

3.7262 g of the polydimethylsiloxane group-containing compound (3), CH₃CH₂CH₂CH₂(Si(CH₃)₂O)ₙSi(CH₃)₂(CH₂)₁₀CONHCH₂CH=CH₂ obtained in Synthesis Example 3, 11.4 g of toluene, 0.02 g of triacetoxymethylsilane, and 0.13 ml of a xylene solution containing a 2% Pt complex of 1,3-divinyl-1,1,3,3-tetramethyldisiloxane were added, respectively, followed by charging 1.3 mL of trichlorosilane, heating to 60°C, and stirring for 4 hours. Thereafter, the volatiles were distilled off under reduced pressure, and then a mixed solution of 0.244 g of methanol and 5.347 g of trimethyl orthoformate was added, followed by heating to 50°C and stirring for 3 hours. Purification was then carried out to obtain 3.69 g of compound (4) having a trimethoxysilyl group at the end, CH₃(CH₂)₃(Si(CH₃)₂O)ₙSi(CH₃)₂(CH₂)₃OCH₂CONHCH₂CH₂CH₂Si(OCH₃)₃ (n ≈ 16).

¹H-NMR (CDCl₃, 400 MHz) δ [ppm]: -0.012-0.303 (m), 0.502-0.543 (m), 0.625-0.666 (m), 0.854-0.888 (m), 1.244-1.338 (m), 1.576-1.652 (m), 3.218-3.267 (m), 3.470-3.611 (m), 5.690 (bs)

### (Synthetic Example 5)

5.0 g of CH₃CH₂CH₂CH₂Si(CH₃)₂O(Si(CH₃)₂O)ₙSi(CH₃)₂CH₂CH₂CH₂OCH₂COOH, 92 mg of 2-propen-1-amine, 31 mg of 1-(3-dimethylaminopropyl)-3-ethylcarbodiimide hydrochloride, 13 mg of 4-dimethylaminopyridine, and 20 mL of dichloromethane were mixed and stirred at room temperature for 16 hours. The reaction liquid was cleaned with hydrochloric acid and water, and then concentrated under reduced pressure to obtain 5.28 g of compound (5), CH₃CH₂CH₂CH₂Si(CH₃)₂O(Si(CH₃)₂O)ₙSi(CH₃)₂CH₂CH₂CH₂OCH₂CONHCH₂CH=CH ₂ (n ≈ 59).

¹H-NMR (400 MHz, chloroform-D) δ [ppm] 6.59-6.71 (br), 5.80-5.91 (m), 5.12-5.24 (m), 3.91-3.97 (m), 3.45-3.50 (t), 1.58-1.69 (m), 1.24-1.36 (m), 0.86-0.91 (t), 0.51-0.58 (m), - 0.10-0.30 (m)

### (Synthetic Example 6)

2.0 g of compound (5), 10 mL of toluene, 47 µL of a xylene solution containing a 2% Pt complex of 1,3-divinyl-1,1,3,3-tetramethyldisiloxane, and 113 µL of aniline were added, respectively, followed by charging 210 µL of trimethoxysilane and stirring at 40°C for 3 hours. Purification was then carried out to obtain 1.74 g of compound (6), CH₃CH₂CH₂CH₂Si(CH₃)₂O(Si(CH₃)₂O)ₙSi(CH₃)₂CH₂CH₂CH₂OCH₂CONHCH₂CH₂CH₂ Si(OCH₃)₃ (n ≈ 59).

¹H-NMR (400 MHz, chloroform-D) δ [ppm] 6.62-6.70 (br), 3.92 (s), 3.53-3.62 (m), 3.43-3.49 (t), 3.27-3.33 (q), 1.58-1.72 (m), 1.24-1.35 (m), 0.85-0.92 (t), 0.63-0.69 (t), 0.50-0.57 (m), -0.13-0.32 (m)

### (Synthetic Example 7)

1.0 g of [(CH₃)₃SiO]₂CH₃SiO(Si(CH₃)₂O)ₙSi(CH₃)₂CH₂CH₂CH₂CH₂CH₂CH₂CH₂CH₂CH₂CH₂C H₂CH₂CH₂CH₂CH₂CH₂CH₂CH₂CH₂CH₂CH₂CH₂CONHCH₂CH=CH₂ (n ≈ 8.7), 10 mL of toluene, 72 µL of a xylene solution containing a 2% Pt complex of 1,3-divinyl-1,1,3,3-tetramethyldisiloxane, and 17 µL of aniline were added, respectively, followed by charging 323 µL of trimethoxysilane and stirring at room temperature for 16 hours. Thereafter, purification was carried out to obtain 0.97 g of compound (7), [(CH₃)₃SiO]₂CH₃SiO(Si(CH₃)₂O)ₙSi(CH₃)₂CH₂CH₂CH₂CH₂CH₂CH₂CH₂CH₂CH₂CH₂C H₂CH₂CH₂CH₂CH₂CH₂CH₂CH₂CH₂CH₂CH₂CH₂CONHCH₂CH₂CH₂Si(OCH₃)₃ (n ≈ 9).

¹H-NMR (400 MHz, chloroform-D) δ [ppm] 7.00 (s), 6.71-6.78 (br), 5.65 (s), 5.33-5.47 (m), 4.62 (s), 4.21-4.50 (br), 3.46-3.67 (m), 3.16-3.29 (m), 2.10-2.39 (m), 1.91-2.06 (m), 1.52-1.68 (m), 1.14-1.36 (br), 0.85-0.99 (m), 0.60-0.70 (t), 0.48-0.59 (m), -0.13-0.25 (m)

### (Synthetic Example 8)

1.0 g of [(CH₃)₃SiO]₃SiO(Si(CH₃)₂O)ₙSi(CH₃)₂CH₂CH₂CH₂CH₂CH₂CH₂CH₂CH₂CH₂CH₂CH₂C H₂CH₂CH₂CH₂CH₂CH₂CH₂CH₂CH₂CH₂CH₂CONHCH₂CH=CH₂ (n ≈ 6.7), 10 mL of toluene, 69 µL of a xylene solution containing a 2% Pt complex of 1,3-divinyl-1,1,3,3-tetramethyldisiloxane, and 17 µL of aniline were added, respectively, followed by charging 309 µL of trimethoxysilane and stirring at room temperature for 16 hours. Thereafter, purification was carried out to obtain 0.98 g of compound (8), [(CH₃)₃SiO]₃SiO(Si(CH₃)₂O)ₙSi(CH₃)₂CH₂CH₂CH₂CH₂CH₂CH₂CH₂CH₂CH₂CH₂CH₂C H₂CH₂CH₂CH₂CH₂CH₂CH₂CH₂CH₂CH₂CH₂CONHCH₂CH₂CH₂Si(OCH₃)₃ (n ≈ 8).

¹H-NMR (400 MHz, chloroform-D) δ [ppm] 7.00 (s), 6.71-6.78 (br), 5.65 (s), 5.33-5.47 (m), 4.62 (s), 4.21-4.50 (br), 3.46-3.67 (m), 3.16-3.29 (m), 2.10-2.39 (m), 1.91-2.06 (m), 1.52-1.68 (m), 1.14-1.38 (br), 0.85-0.99 (m), 0.60-0.70 (t), 0.48-0.59 (m), -0.13-0.25 (m)

### (Comparative Examples)

The following compound (X) was used.
- Compound (X): MCR-XT11 (triethoxysilylethyl-terminated polydimethylsiloxane, Mw=600 to 900), manufactured by Gelest, Inc.

### <Formation of surface-treating layer>

A solvent and a compound were combined as shown in Table 1 below to prepare a surface-treating agent. The compound concentration was set to 20 wt%. In Examples 1 and 3, CH₃(CH₂)₉CONHCH₂CH₂CH₂Si(OCH₃)₃ (0.5 wt%) and CH₃CH=CH(CH₂)₇CONHCH₂CH₂CH₂Si(OCH₃)₃ (0.5 wt%) were added, and in Examples 2 and 4, CH₃(CH₂)₉CONHCH₂CH₂CH₂Si(OCH₃)₃ (16.0 wt%), CH₃CH=CH(CH₂)₇CONHCH₂CH₂CH₂Si(OCH₃)₃ (6.0 wt%), and (H₃CO)₃Si(CH₂)₁₀CONHCH₂CH₂CH₂Si(OCH₃)₃ (1.0 wt%) were added.

### <Na-containing intermediate layer-forming material>

2.2 g of sodium hydroxide (manufactured by FUJIFILM Wako Pure Chemical Corporation) was dissolved in 24 g of distilled water to obtain an 8.4% by mass aqueous sodium hydroxide solution. 24 g of this 8.4% by mass aqueous sodium hydroxide solution and 20 g of M. S. GEL (M. S. GELD-100-60A (manufactured by AGC Si-Tech Co., Ltd.)) were mixed together to allow the aqueous sodium hydroxide solution to be absorbed into the M. S. GEL. The M. S. GEL that absorbed the aqueous sodium hydroxide solution was dried at 25°C for 8 hours, then formed with a tablet forming machine (4 MPa for 1 minute), and baked at 1,000°C for 1 hour to obtain Formed Product 1 (pellets).

### <Na-containing intermediate layer>

The surface-treating agents 1 to 13 prepared above were vacuum-deposited onto chemically strengthened glass (Gorilla Glass, thickness 0.7 mm), manufactured by Corning Incorporated. Specifically, a molybdenum boat in the vacuum deposition device was filled with 0.1 g of the surface-treating agent, and the vacuum deposition device was evacuated to a pressure of 3.0 × 10⁻³ Pa or lower. Thereafter, vapor deposition by the electron beam deposition scheme was performed using the formed article 1 to form a Na-containing silicon dioxide film having a thickness of 7 nm, followed by heating the boat by the resistance heating scheme to form a surface-treating layer. Thereafter, heat treatment was performed in an oven at 150°C for 2 hours to give a surface-treating layer.

### (SiO₂ intermediate layer)

The surface-treating agents 1, 4, and 13 prepared above were vacuum-deposited onto chemically strengthened glass (Gorilla Glass, thickness 0.7 mm), manufactured by Corning Incorporated. Specifically, a molybdenum boat in the vacuum deposition device was filled with 0.1 g of the surface-treating agent, and the vacuum deposition device was evacuated to a pressure of 3.0 × 10⁻³ Pa or lower. Thereafter, a silicon dioxide film having a thickness of 7 nm was formed, followed by heating the boat by the resistance heating scheme to form a surface-treating layer. Thereafter, heat treatment was performed in an oven at 150°C for 2 hours to give a surface-treating layer.

### [Evaluation of Abrasion Resistance]

### (Method for Testing Abrasion Resistance)

After the surface-treating layer was formed, the excess on the surface was wiped off. Then, the following friction block was brought into contact with the formed surface-treating layer, a load of 5 N was applied thereon, and the friction block was reciprocated at a speed of 40 mm/second while applying the load. The static water contact angle (°) was measured at 100 friction times.

For the measurement of contact angle, a fully automatic contact angle meter DropMaster 700 (manufactured by Kyowa Interface Science Co., Ltd) was used under an environment of 25°C. Specifically, the measurement target, substrate having the surface-treating layer, was placed horizontally, 2 µL of water was dropped from a micro syringe onto its surface, and a static image was taken one second after the dropping with a video microscope to thereby measure the static contact angle. The static contact angle was measured at five different points on the surface-treating layer of the substrate, and the average value calculated therefrom was used.

### - Measurement Criteria

80° or higher: excellent (double circle)
60° or higher and lower than 80°: favorable (circle)
50° or higher and lower than 60°: fair (triangle)
Lower than 50°: poor (cross mark)

### - Friction block

The surface of the silicone rubber processed product shown below was covered with cotton soaked in artificial sweat having the compositional features shown below, and the product was used as a friction block.
- Silicone rubber processed product:
   Silicone rubber stopper SR-51 made of Tigers Polymer Corporation processed into a cylindrical shape having a diameter of 1 cm and a thickness of 1 cm.
- Compositional features of artificial sweat:
   Anhydrous disodium hydrogen phosphate: 2 g
   Sodium chloride: 20 g
   85% Lactic acid: 2 g
   Histidine hydrochloride: 5 g
   Distilled water: 1 kg

### [Alkali resistance evaluation]

After having formed the surface-treating layer, the excess content on the surface was wiped off, and then the formed surface-treating layer was brought into contact with a 0.1 mol/L sodium hydroxide aqueous solution. After having left it for 1 hour, the sodium hydroxide aqueous solution was washed away with water, and the surface was dried, after which a static contact angle (°) was measured.

### - Measurement Criteria

Initial contact angle retention rate of 90% or more: excellent (4)
Initial contact angle retention rate of 80% or more and less than 90%: favorable (3)
Initial contact angle retention rate of 70% or more and less than 80%: fair (2)
Initial contact angle retention rate of less than 70%: poor (1)

The results of the abrasion resistance evaluation and alkali resistance evaluation are shown in Table 1 below.

**[Table 1]**

| Example/ Comparative Example No. | Solvent | Compound | Intermediate layer | Abrasion resistance evaluation | Alkali resistance evaluation |
|---|---|---|---|---|---|
| Example 1 | Hexamethyldisiloxane | Compound (2) | Silicon dioxide film | 4 | 4 |
| Example 2 | Hexamethyldisiloxane | Compound (4) | Silicon dioxide film | 3 | 3 |
| Example 3 | Hexamethyldisiloxane | Compound (2) | Silicon dioxide film containing Na | 3 | 4 |
| Example 4 | Hexamethyldisiloxane | Compound (4) | Silicon dioxide film containing Na | 3 | 2 |
| Comparative Example 1 | Hexamethyldisiloxane | Compound (X) | Silicon dioxide film | 3 | 1 |
| Comparative Example 2 | Hexamethyldisiloxane | Compound (X) | Silicon dioxide film containing Na | 3 | 1 |
| Example 5 | Heptane | Compound (6) | Silicon dioxide film | 3 | 2 |
| Example 6 | Heptane | Compound (7) | Silicon dioxide film | 3 | 4 |
| Example 7 | Heptane | Compound (8) | Silicon dioxide film | 3 | 4 |
| Example 8 | Heptane | Compound (6) | Silicon dioxide film containing Na | 3 | 4 |
| Example 9 | Heptane | Compound (7) | Silicon dioxide film containing Na | 4 | 4 |
| Example 10 | Heptane | Compound (8) | Silicon dioxide film containing Na | 4 | 4 |
| Example 11 | Hexamethyldisiloxane | Compound (2) | Silicon dioxide film | 4 | 4 |
| Example 12 | Hexamethyldisiloxane | Compound (4) | Silicon dioxide film | 3 | 3 |
| Example 13 | Hexamethyldisiloxane | Compound (2) | Silicon dioxide film containing Na | 3 | 4 |
| Example 14 | Hexamethyldisiloxane | Compound (4) | Silicon dioxide film containing Na | 3 | 2 |

### Industrial Applicability

The surface-treating agent of the present disclosure can be suitably utilized in a variety of diverse applications.

## Claims

1. A compound of the following formula (1):
R¹-X¹-SiR¹¹ₙ₁R¹²₃₋ₙ₁ (1)
wherein
R¹ is a monovalent group containing one or more Si atoms to which neither a hydroxyl group nor a hydrolyzable group is directly bonded,
X¹ is a divalent organic group containing an amide bond,
R¹¹ is each independently a hydroxyl group or a hydrolyzable group,
R¹² is each independently a hydrogen atom or a monovalent organic group, and
n1 is an integer of 1 to 3.

2. The compound according to claim 1, wherein
R¹ is R³-(SiR⁴₂O)ₙ-SiR⁴₂-,
R³ is a C₁₋₁₂ alkyl group, a phenyl group, or a group A,
wherein the group A is a group of the following formula:
R⁵¹ₙₐR⁵²₃₋ₙₐSi-(O)_{z}- (A)
wherein
R⁵¹ is each independently a group of R⁵³-(S₁R⁵³₂-R⁶¹)ₘₐ-,
R⁶¹ is each independently a single bond, an oxygen atom, or a C₁₋₆ alkylene group,
R⁵³ is each independently a hydrocarbon group or R⁵¹',
R^{51'} has the same meaning as R⁵¹
ma is each independently an integer of 1 to 5,
provided that the number of R^{51'} in R⁵¹ is 20 or less,
R⁵² is each independently a hydrocarbon group,
na is an integer of 1 to 3, and
z is 0 or 1,
R⁴ is each independently a C₁₋₁₂ alkyl group, a phenyl group, or R³-(SiR^{4'}₂O)ₙ-, R^{4'} is each independently a C₁₋₁₂ alkyl group, or a phenyl group, and
n is 1 to 1500.

3. The compound according to claim 2, wherein R³ is a C₁₋₄ alkyl group.

4. The compound according to claim 2, wherein R³ is a methyl group.

5. The compound according to claim 2, wherein R⁴ is a methyl group.

6. The compound according to claim 1, wherein X¹ is a group of the following formula:
-R¹⁴-CONR¹³-R¹⁵.
wherein
R¹³ is a hydrogen atom, a C₁₋₆ alkyl group, or a phenyl group,
R¹⁴ is -(R⁵¹)ₚ₅-(X⁵¹)_{q5}-,
R⁵¹ is a single bond, -(CH₂)ₚ-, or an o-, m-, or p-phenylene group,
p5 is an integer of 0 to 30,
X⁵¹ is -(X¹²)₁₅-,
X⁵² is each independently a group selected from the group consisting of -O-, -S-, an o-, m- or p-phenylene group, -CO-, -C(O)O-, -CONR⁵⁴-, -O-CONR⁵⁴-, -NR⁵⁴-, and - (CH₂)ₙ₅-,
R⁵⁴ is each independently a hydrogen atom or a monovalent organic group,
n5 is each independently an integer of 1 to 20,
l5 is an integer of 1 to 10,
p5 is 0 or 1,
q5 is 0 or 1,
R¹⁵ is a single bond, -(CH₂)_{q}-, or an o-, m-, or p-phenylene group, and
q is an integer of 1 to 10.

7. The compound according to claim 1, wherein
R¹ is a group of the following formula:
R³-(SiR⁴₂O)ₙ-SiR⁴₂-
wherein
R³ is a C₁₋₄ alkyl group,
R⁴ is a methyl group, and
n is an integer of 1 to 80,
X¹ is a group of the following formula:
-(CH₂)ₚ-CONR¹³-(CH₂)_{q}-
-(CH₂)ₚ₁-O-(CH₂)ₚ₂-CONR¹³-(CH₂)_{q}-
wherein
R¹³ is a hydrogen atom,
p is an integer of 1 to 30,
p1 is an integer of 1 to 10,
p2 is an integer of 1 to 10, and
q is an integer of 1 to 10,
R¹¹ is OCH₃, and
n1 is 3.

8. The compound according to claim 7, wherein n is an integer of 1 to 30.

9. The compound according to claim 7, wherein n is an integer of 20 to 80.

10. The compound according to claim 1, wherein
R¹ is R³-(SiR⁴₂O)ₙ-SiR⁴₂-,
R³ is a C₁₋₄ alkyl group or a group A,
the group A is [(CH₃)₃SiO]₂CH₃Si(CH₃)₂O- or [(CH₃)₃SiO]₃Si(CH₃)₂O-,
R⁴ is a methyl group,
n is an integer of 1 to 100,
X¹ is -(CH₂)ₚ-CONH-(CH₂)_{q}-,
p is an integer of 3 to 30, and
q is an integer of 2 to 3.

11. The compound according to claim 1, which is selected from the following compounds:
CH₃Si(CH₃)₂O(Si(CH₃)₂O)ₙSi(CH₃)₂(CH₂)₁₀CONHCH₂CH₂CH₂Si(OCH₃)₃,
CH₃(CH₂)₃(Si(CH₃)₂O)ₙSi(CH₃)₂(CH₂)₃OCH₂CONHCH₂CH₂CH₂Si(OCH₃)₃,
CH₃CH₂CH₂CH₂Si(CH₃)₂O(Si(CH₃)₂O)ₙSi(CH₃)₂CH₂CH₂CH₂OCH₂CONHCH₂CH₂CH ₂Si(OCH₃)₃,
[(CH₃)₃SiO]₂CH₃SiO(Si(CH₃)₂O)ₙSi(CH₃)₂CH₂CH₂CH₂CH₂CH₂CH₂CH₂CH₂CH₂CH₂C H₂CH₂CH₂CH₂CH₂CH₂CH₂CH₂CH₂CH₂CH₂CH₂CONHCH₂CH₂CH₂Si(OCH₃)₃,
[(CH₃)₃SiO]₃SiO(Si(CH₃)₂O)ₙSi(CH₃)₂CH₂CH₂CH₂CH₂CH₂CH₂CH₂CH₂CH₂CH₂CH₂C H₂CH₂CH₂CH₂CH₂CH₂CH₂CH₂CH₂CH₂CH₂CONHCH₂CH₂CH₂Si(OCH₃)₃,
wherein n is an integer of 2 to 80.

12. The compound according to claim 1, which is selected from the following compounds:
CH₃Si(CH₃)₂O(Si(CH₃)₂O)ₙSi(CH₃)₂(CH₂)₁₀CONHCH₂CH₂CH₂Si(OCH₃)₃,
wherein n is an integer of 10 to 30,
CH₃(CH₂)₃(Si(CH₃)₂O)ₙSi(CH₃)₂(CH₂)₃OCH₂CONHCH₂CH₂CH₂Si(OCH₃)₃,
wherein n is an integer of 10 to 30,
CH₃CH₂CH₂CH₂Si(CH₃)₂O(Si(CH₃)₂O)ₙSi(CH₃)₂CH₂CH₂CH₂OCH₂CONHCH₂CH₂CH ₂Si(OCH₃)₃,
wherein n is an integer of 40 to 70,
[(CH₃)₃SiO]₂CH₃SiO(Si(CH₃)₂O)ₙSi(CH₃)₂CH₂CH₂CH₂CH₂CH₂CH₂CH₂CH₂CH₂CH₂C H₂CH₂CH₂CH₂CH₂CH₂CH₂CH₂CH₂CH₂CH₂CH₂CONHCH₂CH₂CH₂Si(OCH₃)₃,
wherein n is an integer of 5 to 20,
[(CH₃)₃SiO]₃SiO(Si(CH₃)₂O)ₙSi(CH₃)₂CH₂CH₂CH₂CH₂CH₂CH₂CH₂CH₂CH₂CH₂CH₂C H₂CH₂CH₂CH₂CH₂CH₂CH₂CH₂CH₂CH₂CH₂CONHCH₂CH₂CH₂Si(OCH₃)₃,
wherein n is an integer of 5 to 20.

13. A compound of the following formula (2):
R³-(S₁R⁴₂O)ₙ-S₁R⁴₂-(CH₂)ₚ-CONR¹³-(CH₂)_{q'}-CH=CH₂ (2)
wherein
R³ is a C₁₋₁₂ alkyl group, a phenyl group, or a group A,
the group A is a group of the following formula:
**R⁵¹ₙₐR⁵²₃₋ₙₐ**Si-(O)_{z} - (A)
wherein
R⁵¹ is each independently a group of R⁵³-(S₁R⁵³₂-R⁶¹)ₘₐ-;
R⁶¹ is each independently a single bond, an oxygen atom, or a C₁₋₆ alkylene group;
R⁵³ is each independently a hydrocarbon group or R^{51'},
R^{51'} has the same meaning as R⁵¹,
ma is each independently an integer of 1 to 5,
provided that the number of R^{51'} in R⁵¹ is 20 or less,
R⁵² is each independently a hydrocarbon group,
na is an integer of 1 to 3, and
z is 0 or 1,
R⁴ is each independently a C₁₋₁₂ alkyl group, a phenyl group, or R³-(SiR^{4'}₂O)ₙ-,
R^{4'} is each independently a C₁₋₁₂ alkyl group, or a phenyl group,
n is 1 to 1,500,
R¹³ is a hydrogen atom, a C₁₋₆ alkyl group, or a phenyl group,
p is an integer of 0 to 30, and
q' is an integer of 1 to 8.

14. A composition comprising the compound according to claim 1 and a compound of formula (3):
R²¹-R²²-CONR²⁴-R²³-SiR¹¹ₙ₁R¹²₃₋ₙ₁ (3)
wherein
R²¹ is CH₃CH₂CH₂-, CH₃CH=CH-, or R¹²₃₋ₙ₁R¹¹ₙ₁Si-,
R²² is a C₀₋₃₀ alkylene group,
R²³ is a C₁₋₁₀ alkylene group,
R²⁴ is a hydrogen atom, a C₁₋₆ alkyl group, or a phenyl group,
R¹¹ is each independently a hydroxyl group or a hydrolyzable group,
R¹² is each independently a hydrogen atom or a monovalent organic group, and
n1 is an integer of 1 to 3.

15. The composition according to claim 14, comprising the compound of the formula (3) in an amount of 0.1% by mass to 30% by mass based on a total amount of the compound of the formula (1) and the compound of the formula (3).

16. The composition according to claim 14, which is a surface-treating agent.

17. A surface-treating agent comprising the compound according to any one of claims 1 to 13.

18. The surface-treating agent according to claim 17, further comprising a condensate of the compound according to claim 1.

19. The surface-treating agent according to claim 17, further comprising a solvent selected from compounds of R⁸¹OR⁸², R⁸³ₙ₈C₆H₆₋ₙ₈, R⁸⁴R⁸⁵R⁸⁶ Si-(O-SiR⁸⁷R⁸⁸)ₘ₈-R⁸⁹, and (OSiR⁸⁷R⁸⁸)ₘ₉
wherein
R⁸¹ to R⁸⁹ are each independently a monovalent organic group having 1 to 10 carbon atoms,
m8 is an integer of 1 to 6,
m9 is an integer of 4 to 8, and
n8 is an integer of 0 to 6.

20. The surface-treating agent according to claim 19, wherein the solvent is R⁸⁴R⁸⁵R⁸⁶Si-(O-SiR⁸⁷R⁸⁸)ₘ₈-R⁸⁹.

21. The surface-treating agent according to claim 19, wherein the solvent is hexamethyldisiloxane, hexaethyldisiloxane, octamethyltrisiloxane, octamethylcyclotetrasiloxane, or decamethylcyclopentasiloxane.

22. The surface-treating agent according to claim 17, which is for vacuum deposition.

23. The surface-treating agent according to claim 17, which is for wet coating.

24. A pellet comprising the surface-treating agent according to claim 17.

25. An article comprising a substrate and a layer on the substrate, wherein the layer is formed from the compound according to any one of claims 1 to 12.

26. The article according to claim 25, comprising, between the substrate and the aforementioned layer, a silicon oxide-containing intermediate layer.

27. The article according to claim 26, wherein the intermediate layer comprises an alkali metal atom.

28. The article according to claim 27, wherein the alkali metal atom is at least partially a sodium atom.

29. The article according to claim 25, which is an optical member.

30. The article according to claim 25, which is a display.
